# EUROPEAN PATENT APPLICATION

(11) **EP 4 800 356 A1**
(43) Date of publication of application: **02.09.2026**
(21) Application number: 24896569.1
(22) Date of filing: 27.11.2024
(51) Int. Cl.: G01C 21/32, G01C 21/36

(54) **MAP DATA UPDATING SYSTEM, LAYERED TRANSMISSION METHOD FOR MAP DATA, AND PRODUCT**

(30) Priority: 30.11.2023 CN 202311641170
(71) Applicant: Yinwang Intelligent Technologies Co., Ltd., Shenzhen, Guangdong 518110 (CN)
(72) Inventor: GAI, Jiyu, Shenzhen, Guangdong 518129 (CN); WU, Yonggang, Shenzhen, Guangdong 518129 (CN); LIU, Jianqin, Shenzhen, Guangdong 518129 (CN)
(74) Representative: Pfenning, Meinig & Partner mbB
(86) International application number: PCT/CN2024/134868
(87) International publication number: WO 2025/113483

(57) **Abstract**

A map data updating system, a map data level-based transmission method, a garage control method, and a product thereof are disclosed. The system includes an electronic horizon provider (electronic horizon provider, EHP) and an electronic horizon reconstructor (electronic horizon reconstructor, EHR). The EHP sends a first electronic horizon to the EHR (301), and sends a second electronic horizon to the EHR (302), where a geographical coverage area corresponding to the first electronic horizon is greater than and includes a geographical coverage area corresponding to the second electronic horizon, and a map element included in the first electronic horizon is different from a map element included in the second electronic horizon. After a vehicle travels out of the geographical coverage area corresponding to the second electronic horizon, the vehicle may travel based on the first electronic horizon (304). This can resolve a problem that no map data is available after the vehicle travels out of the geographical coverage area corresponding to the second electronic horizon.

## Description

This application claims priority to Chinese Patent Application No. 202311641170.3, filed with the China National Intellectual Property Administration on November 30, 2023 and entitled "MAP DATA UPDATING SYSTEM, MAP DATA LEVEL-BASED TRANSMISSION METHOD, AND PRODUCT", which is incorporated herein by reference in its entirety.

### TECHNICAL FIELD

This application relates to the field of intelligent vehicles, and in particular, to a map data updating system, a map data level-based transmission method, and a product.

### BACKGROUND

Navigation, and planning and control (referred to as PnC for short), among other intelligent driving applications, require map data for their implementation. Map data provided by map vendors is usually organized in different formats, and elements are strongly coupled. Therefore, the map data cannot be directly input to intelligent driving modules such as a navigation module and a planning and control module for use. Currently, interaction between map data and an application is usually implemented by using an electronic horizon provider (electronic horizon provider, EHP) and an electronic horizon reconstructor (electronic horizon reconstructor, EHR). The EHP is responsible for reading global map data, and integrating (reorganizing map elements in a specific format) and outputting map data, namely, electronic horizon data, in a specific range in front of and around a vehicle based on a current vehicle position. The EHR is responsible for parsing the map data (electronic horizon data) sent by the EHP, and then sending the map data to the intelligent driving modules such as the navigation module or the planning and control module for use.

If the vehicle deviates from an original planned path for some reasons, the EHR sends an offset of the vehicle on a new path, and requests the EHP to reset (or update) the electronic horizon data. However, in limited time, the EHP may not be able to release updated electronic horizon data in a timely manner. To be specific, after the vehicle travels out of a range of the original electronic horizon data, and before the EHP releases the updated electronic horizon data, no electronic horizon data is available for the vehicle. When no electronic horizon data is available for the vehicle, a currently used solution is as follows: A driver is reminded to take over or sensor data is temporarily used for planning and control. This affects user experience and brings a challenge to implementation of safe driving.

### SUMMARY

This application discloses a map data updating system, a map data level-based transmission method, and a product, to resolve a problem that no map data is available after a vehicle deviates from an original planned path.

According to a first aspect, an embodiment of this application provides a map data updating system. The system includes an electronic horizon provider (electronic horizon provider, EHP) and an electronic horizon reconstructor (electronic horizon reconstructor, EHR). The EHP sends a first electronic horizon to the EHR; and the EHP sends a second electronic horizon to the EHR. A geographical coverage area corresponding to the first electronic horizon is greater than and includes a geographical coverage area corresponding to the second electronic horizon; and a map element included in the first electronic horizon is different from a map element included in the second electronic horizon, and/or precision of the first electronic horizon is lower than precision of the second electronic horizon. In this specification, the map element may be replaced with a profile or profile information or a profile object.

In this embodiment of this application, the geographical coverage area corresponding to the first electronic horizon is greater than and includes the geographical coverage area corresponding to the second electronic horizon. After a vehicle travels out of the geographical coverage area corresponding to the second electronic horizon, the vehicle may travel based on the first electronic horizon. This can resolve a problem that no map data is available after the vehicle travels out of the geographical coverage area corresponding to the second electronic horizon. For example, the vehicle plans a traveling path based on the first electronic horizon, and the vehicle is navigated, based on the traveling path, to an area in which the vehicle can be parked or the vehicle travels to a destination of the vehicle.

In a possible implementation, an application that is executed by the vehicle and that is supported by the first electronic horizon is different from an application that is executed by the vehicle and that is supported by the second electronic horizon, and the EHR is deployed on the vehicle. For example, the application that is executed by the vehicle and that is supported by the second electronic horizon includes planning and control, and the application that is executed by the vehicle and that is supported by the first electronic horizon does not include planning and control. In other words, the application that can be executed by the vehicle based on the second electronic horizon is different from the application that can be executed by the vehicle based on the first electronic horizon. For example, the vehicle can execute a planning and control algorithm based on the second electronic horizon and the first electronic horizon (optional), to implement planning and control on the vehicle, but the vehicle cannot execute the planning and control algorithm based on the first electronic horizon. In this specification, planning and control may be executing the planning and control algorithm.

In this implementation, the application that is executed by the vehicle and that is supported by the first electronic horizon is different from the application that is executed by the vehicle and that is supported by the second electronic horizon, and the first electronic horizon and the second electronic horizon may be used to execute different applications.

In a possible implementation, the application that is executed by the vehicle and that is supported by the second electronic horizon includes planning and control. To be specific, the vehicle may execute the planning and control algorithm based on the second electronic horizon, and the EHR is deployed on the vehicle. The application that is executed by the vehicle and that is supported by the first electronic horizon includes positioning and/or navigation. For example, the application that is executed by the vehicle and that is supported by the first electronic horizon does not include planning and control, in other words, the vehicle cannot execute the planning and control algorithm based on only the first electronic horizon.

In this implementation, the application that is executed by the vehicle and that is supported by the first electronic horizon includes positioning and/or navigation. After the vehicle travels out of the geographical coverage area corresponding to the second electronic horizon, the vehicle may perform positioning and/or navigation based on the first electronic horizon, so that driving safety and user experience can be improved.

In a possible implementation, the map element included in the first electronic horizon is a map element required for the vehicle to execute a first application, the map element included in the second electronic horizon is a map element required for the vehicle to execute a second application, the first application includes positioning and/or navigation, and the second application includes planning and control. For example, the first application does not include planning and control.

In this implementation, the map element included in the first electronic horizon is the map element required by the vehicle to execute the first application, so that the vehicle executes the first application based on the first electronic horizon. The map element included in the second electronic horizon is the map element required by the vehicle to execute the second application, so that the vehicle executes the second application based on the second electronic horizon.

In a possible implementation, the map element included in the first electronic horizon includes at least one of the following: road topology information, a road traveling rule, and traffic flow information; and the map element included in the second electronic horizon includes at least one of the following: lane information, information about a sign, information about an obstacle, information about a traffic light, a traffic sign, a real-time traffic flow speed, speed limit information, weather information, road type information, road surface information, a map database corresponding to a road section, and road condition information. The first electronic horizon and the second electronic horizon may include one or more same map elements, that is, the map element included in the first electronic horizon and the map element included in the second electronic horizon overlap. The first electronic horizon and the second electronic horizon may alternatively include different map elements, that is, the map element included in the first electronic horizon and the map element included in the second electronic horizon do not overlap.

In this implementation, the map element included in the first electronic horizon includes at least one of the following: the road topology information, the road traveling rule, and the traffic flow information, so that the vehicle performs positioning and/or navigation based on the first electronic horizon. The map element included in the second electronic horizon includes at least one of the following: the lane information, the information about the sign, the information about the obstacle, the information about the traffic light, the traffic sign, the real-time traffic flow speed, the speed limit information, the weather information, the road type information, the road surface information, and the map database corresponding to the road section, so that the vehicle performs planning and control based on the second electronic horizon.

According to a second aspect, an embodiment of this application provides a map data level-based transmission method. The method is applied to an EHR, and the method includes: receiving a first electronic horizon from the EHP; and receiving a second electronic horizon from the EHP. A geographical coverage area corresponding to the first electronic horizon is greater than and includes a geographical coverage area corresponding to the second electronic horizon; and a map element included in the first electronic horizon is different from a map element included in the second electronic horizon, and/or precision of the first electronic horizon is lower than precision of the second electronic horizon.

In this embodiment of this application, the geographical coverage area corresponding to the first electronic horizon is greater than and includes the geographical coverage area corresponding to the second electronic horizon. After a vehicle travels out of the geographical coverage area corresponding to the second electronic horizon, the vehicle may travel based on the first electronic horizon. This can resolve a problem that no map data is available after the vehicle travels out of the geographical coverage area corresponding to the first electronic horizon. For example, the vehicle plans a traveling path based on the first electronic horizon, and the vehicle is navigated, based on the traveling path, to an area in which the vehicle can be parked or the vehicle travels to a destination of the vehicle.

In a possible implementation, an application that is executed by the vehicle and that is supported by the first electronic horizon is different from an application that is executed by the vehicle and that is supported by the second electronic horizon, and the EHR is deployed on the vehicle.

In this implementation, the application that is executed by the vehicle and that is supported by the first electronic horizon is different from the application that is executed by the vehicle and that is supported by the second electronic horizon, and the first electronic horizon and the second electronic horizon may be used to execute different applications, to prevent the EHP from sending map data with a same function.

In a possible implementation, the application that is executed by the vehicle and that is supported by the second electronic horizon includes planning and control. To be specific, the vehicle may execute the planning and control algorithm based on the second electronic horizon, and the EHR is deployed on the vehicle. The application that is executed by the vehicle and that is supported by the first electronic horizon includes positioning and/or navigation. For example, the application that is executed by the vehicle and that is supported by the first electronic horizon does not include planning and control, in other words, the vehicle cannot execute the planning and control algorithm based on only the first electronic horizon.

In this implementation, the application that is executed by the vehicle and that is supported by the first electronic horizon includes positioning and/or navigation. After the vehicle travels out of the geographical coverage area corresponding to the second electronic horizon, the vehicle may perform positioning and/or navigation based on the first electronic horizon, so that driving safety and user experience can be improved.

In a possible implementation, the map element included in the first electronic horizon is a map element required for the vehicle to execute a first application, the map element included in the second electronic horizon is a map element required for the vehicle to execute a second application, the first application includes positioning and/or navigation, and the second application includes planning and control. For example, the first application does not include planning and control.

In this implementation, the map element included in the first electronic horizon is the map element required by the vehicle to execute the first application, so that the vehicle executes the first application based on the first electronic horizon. The map element included in the second electronic horizon is the map element required by the vehicle to execute the second application, so that the vehicle executes the second application based on the second electronic horizon.

In a possible implementation, the map element included in the first electronic horizon includes at least one of the following: road topology information, a road traveling rule, and traffic flow information; and the map element included in the second electronic horizon includes at least one of the following: lane information, information about a sign, information about an obstacle, information about a traffic light, a traffic sign, a real-time traffic flow speed, speed limit information, weather information, road type information, road surface information, a map database corresponding to a road section, and road condition information.

In this implementation, the map element included in the first electronic horizon includes at least one of the following: the road topology information, the road traveling rule, and the traffic flow information, so that the vehicle performs positioning and/or navigation based on the first electronic horizon. The map element included in the second electronic horizon includes at least one of the following: the lane information, the information about the sign, the information about the obstacle, the information about the traffic light, the traffic sign, the real-time traffic flow speed, the speed limit information, the weather information, the road type information, the road surface information, and the map database corresponding to the road section, so that the vehicle performs planning and control based on the second electronic horizon.

In a possible implementation, the method further includes: sending a first message to the EHP, where the first message is used to request the first electronic horizon and/or the second electronic horizon, the first message includes at least one of position information and range information of the vehicle, the range information indicates the geographical coverage area corresponding to the first electronic horizon and/or the geographical coverage area corresponding to the second electronic horizon, and the EHR is deployed on the vehicle.

In this implementation, the first message includes at least one of the position information and the range information of the vehicle, so that the EHP sends the first electronic horizon and/or the second electronic horizon to the EHR based on at least one of the position information and the range information of the vehicle.

In a possible implementation, the first message is an initialization request message, and the first message is used to request the first electronic horizon and the second electronic horizon.

In this implementation, the first message is the initialization request message, and the EHR may send the first message to request the first electronic horizon and the second electronic horizon.

In a possible implementation, the first message further includes at least one of the following: first map element information, where the first map element information indicates the map element corresponding to the first electronic horizon; first limitation information, where the first limitation information is used to limit or indicate a data volume of the first electronic horizon; second map element information, where the second map element information indicates the map element corresponding to the second electronic horizon; and second limitation information, where the second limitation information is used to limit or indicate a data volume of the second electronic horizon.

In this implementation, the first message further includes at least one of the first map element information, the second map element information, the first limitation information, or the second limitation information. Map data requested by the EHR is further limited, so that the EHP provides map data required by the EHR.

In a possible implementation, the sending the first message to the EHP includes: sending the first message to the EHP before the vehicle travels out of a geographical coverage area corresponding to a third electronic horizon, where the first message is an update request message, the first message is used to request the second electronic horizon, a type of a map element included in the third electronic horizon is the same as a type of the map element included in the second electronic horizon, a partial geographical coverage area in the geographical coverage area corresponding to the second electronic horizon is not included in the geographical coverage area corresponding to the third electronic horizon, and the geographical coverage area corresponding to the first electronic horizon is greater than and includes the geographical coverage area corresponding to the third electronic horizon.

In this implementation, before the vehicle travels out of the geographical coverage area corresponding to the third electronic horizon, the first message is sent to the EHP; and the second electronic horizon may be obtained before the vehicle travels out of the geographical coverage area corresponding to the third electronic horizon. In this way, the second electronic horizon can be used after the vehicle travels out of the geographical coverage area corresponding to the third electronic horizon.

In a possible implementation, before the first message is sent, the method further includes: determining an incremental range of a second-level geographical coverage area based on the second-level geographical coverage area expected by the EHR and an existing second-level geographical coverage area of the EHR, where the existing second-level geographical coverage area of the EHR is the geographical coverage area corresponding to the third electronic horizon; and generating the first message based on the incremental range, where the range information included in the first message indicates the incremental range. For example, the third electronic horizon is existing upper-level map data of the EHR, the second electronic horizon is upper-level map data expected by the EHR, the second-level geographical coverage area is a geographical coverage area corresponding to the upper-level map data expected by the EHR, and the existing second-level geographical coverage area of the EHR is a geographical coverage area corresponding to the existing upper-level map data of the EHR.

In this implementation, the first message is generated based on the incremental range, and the required map data may be obtained by sending the first message.

In a possible implementation, the first message further includes at least one of the following: second map element information, where the second map element indicates the map element corresponding to the second electronic horizon; second limitation information, where the second limitation information is used to limit or indicate a data volume of the second electronic horizon; and second path identification information, where the second path identification information indicates a path included in the second electronic horizon.

In this implementation, the first message further includes at least one of the second map element information, the second path identification information, or the second limitation information. Map data requested by the EHR is further limited, so that the EHP provides map data required by the EHR.

In a possible implementation, the sending the first message to the EHP includes: sending the first message to the EHP after the vehicle travels out of a geographical coverage area corresponding to a third electronic horizon, where the first message is an update request message, the first message is used to request the second electronic horizon, a type of a map element included in the third electronic horizon is the same as a type of the map element included in the second electronic horizon, and a partial geographical coverage area in the geographical coverage area corresponding to the second electronic horizon is not included in the geographical coverage area corresponding to the third electronic horizon.

In this implementation, after the vehicle travels out of the geographical coverage area corresponding to the third electronic horizon, the first message is sent to the EHP, so that the second electronic horizon can be obtained in time.

In a possible implementation, the first message further includes at least one of the following: second map element information, where the second map element information indicates the map element corresponding to the second electronic horizon; second limitation information, where the second limitation information is used to limit or indicate a data volume of the second electronic horizon; second path identification information, where the second path identification information indicates a path included in the second electronic horizon; and information about a traveling path planned by the vehicle.

In this implementation, the first message further includes at least one of the second map element information, the second path identification information, or the second limitation information. Map data requested by the EHR is further limited, so that the EHP provides map data required by the EHR.

According to a third aspect, an embodiment of this application provides another map data level-based transmission method. The method is applied to an EHP, and the method includes: sending a first electronic horizon to an EHR; and sending a second electronic horizon to the EHR. A geographical coverage area corresponding to the first electronic horizon is greater than and includes a geographical coverage area corresponding to the second electronic horizon; and a map element included in the first electronic horizon is different from a map element included in the second electronic horizon, and/or precision of the first electronic horizon is lower than precision of the second electronic horizon.

In this embodiment of this application, the geographical coverage area corresponding to the first electronic horizon is greater than and includes the geographical coverage area corresponding to the second electronic horizon. After a vehicle travels out of the geographical coverage area corresponding to the second electronic horizon, the vehicle may travel based on the first electronic horizon. This can resolve a problem that no map data is available after the vehicle travels out of the geographical coverage area corresponding to the first electronic horizon. For example, after traveling out of the geographical coverage area corresponding to the second electronic horizon, the vehicle plans a traveling path based on the first electronic horizon, and the vehicle is navigated, based on the traveling path, to an area in which the vehicle can be parked or the vehicle travels to a destination of the vehicle.

In a possible implementation, an application that is executed by the vehicle and that is supported by the first electronic horizon is different from an application that is executed by the vehicle and that is supported by the second electronic horizon, and the EHR is deployed on the vehicle.

In this implementation, the application that is executed by the vehicle and that is supported by the first electronic horizon is different from the application that is executed by the vehicle and that is supported by the second electronic horizon, and the first electronic horizon and the second electronic horizon may be used to execute different applications, to prevent the EHP from sending map data with a same function.

In a possible implementation, the application that is executed by the vehicle and that is supported by the second electronic horizon includes planning and control. To be specific, the vehicle may execute the planning and control algorithm based on the second electronic horizon, and the EHR is deployed on the vehicle. The application that is executed by the vehicle and that is supported by the first electronic horizon includes positioning and/or navigation. For example, the application that is executed by the vehicle and that is supported by the first electronic horizon does not include planning and control, in other words, the vehicle cannot execute the planning and control algorithm based on only the first electronic horizon.

In this implementation, the application that is executed by the vehicle and that is supported by the first electronic horizon includes positioning and/or navigation. After the vehicle travels out of the geographical coverage area corresponding to the second electronic horizon, the vehicle may perform positioning and/or navigation based on the first electronic horizon, so that driving safety and user experience can be improved.

In a possible implementation, the map element included in the first electronic horizon is a map element required for the vehicle to execute a first application, the map element included in the second electronic horizon is a map element required for the vehicle to execute a second application, the first application includes positioning and/or navigation, and the second application includes planning and control. For example, the first application does not include planning and control.

In this implementation, the map element included in the first electronic horizon is the map element required by the vehicle to execute the first application, so that the vehicle executes the first application based on the first electronic horizon. The map element included in the second electronic horizon is the map element required by the vehicle to execute the second application, so that the vehicle executes the second application based on the second electronic horizon.

In a possible implementation, the map element included in the first electronic horizon includes at least one of the following: road topology information, a road traveling rule, and traffic flow information; and the map element included in the second electronic horizon includes at least one of the following: lane information, information about a sign, information about an obstacle, information about a traffic light, a traffic sign, a real-time traffic flow speed, speed limit information, weather information, road type information, road surface information, a map database corresponding to a road section, and road condition information.

In this implementation, the map element included in the first electronic horizon includes at least one of the following: the road topology information, the road traveling rule, and the traffic flow information, so that the vehicle performs positioning and/or navigation based on the first electronic horizon. The map element included in the second electronic horizon includes at least one of the following: the lane information, the information about the sign, the information about the obstacle, the information about the traffic light, the traffic sign, the real-time traffic flow speed, the speed limit information, the weather information, the road type information, the road surface information, and the map database corresponding to the road section, so that the vehicle performs planning and control based on the second electronic horizon.

In a possible implementation, the method further includes: receiving a first message from the EHR, where the first message is used to request the first electronic horizon and/or the second electronic horizon, the first message includes at least one of position information and range information of the vehicle, the range information indicates the geographical coverage area corresponding to the first electronic horizon and/or the geographical coverage area corresponding to the second electronic horizon, and the EHR is deployed on the vehicle; and sending the first electronic horizon and/or the second electronic horizon to the EHR based on the first message.

In this implementation, the first message includes at least one of the position information and the range information of the vehicle, so that the EHP sends the first electronic horizon and/or the second electronic horizon to the EHR based on at least one of the position information and the range information of the vehicle.

In a possible implementation, the first message is an initialization request message, the first message is used to request the first electronic horizon and the second electronic horizon, and the first message includes the position information of the vehicle; and before the first electronic horizon and/or the second electronic horizon are/is sent to the EHR based on the first message, the method further includes: determining a traveling path of the vehicle based on the position information of the vehicle; constituting the second electronic horizon based on information about the traveling path and information about a sub-path of the traveling path; and constituting the first electronic horizon based on topology information of a road connected to the traveling path of the vehicle.

In this implementation, the first electronic horizon and the second electronic horizon that correspond to different geographical coverage areas are constituted, to avoid a case in which no map data is available after the vehicle travels out of the geographical coverage area corresponding to the second electronic horizon.

In a possible implementation, the first message further includes at least one of the following: first map element information, where the first map element information indicates the map element corresponding to the first electronic horizon; first limitation information, where the first limitation information is used to limit or indicate a data volume of the first electronic horizon; second map element information, where the second map element information indicates the map element corresponding to the second electronic horizon; and second limitation information, where the second limitation information is used to limit or indicate a data volume of the second electronic horizon.

In this implementation, the first message further includes at least one of the first map element information, the second map element information, the first limitation information, or the second limitation information. Map data requested by the EHR is further limited, so that the EHP can provide map data required by the EHR.

In a possible implementation, the first message is an update request message, and the first message is used to request the second electronic horizon; and before the first electronic horizon and/or the second electronic horizon are/is sent to the EHR based on the first message, the method further includes: constituting the second electronic horizon based on information about the traveling path of the vehicle and information about a subpath of the traveling path.

In this implementation, the second electronic horizon is constituted based on the information about the traveling path of the vehicle and the information about the sub-path of the traveling path, so that the vehicle performs planning and control based on the second electronic horizon.

In a possible implementation, the first message further includes the traveling path of the vehicle; and before the second electronic horizon is constituted based on the information about the traveling path of the vehicle and the information about the sub-path of the traveling path, the method further includes: determining, based on the traveling path of the vehicle, the geographical coverage area corresponding to the second electronic horizon.

In this implementation, the geographical coverage area corresponding to the second electronic horizon is determined based on the traveling path of the vehicle. The geographical coverage area corresponding to the second electronic horizon may be properly determined, to avoid an excessively large or excessively small determined geographical coverage area corresponding to the second electronic horizon.

In a possible implementation, the first message further includes the traveling path of the vehicle; and before the second electronic horizon is constituted based on the information about the traveling path of the vehicle and the information about the sub-path of the traveling path, the method further includes: determining, based on the traveling path of the vehicle, a path included in the second electronic horizon.

In this implementation, the path included in the second electronic horizon is determined based on the traveling path of the vehicle. In this way, the determined path included in the second electronic horizon is a path associated with the traveling path, so that the second electronic horizon does not include a path unrelated to the traveling path.

In a possible implementation, the range information indicates an incremental range of a second-level geographical coverage area expected by the EHR relative to an existing second-level geographical coverage area of the EHR, the existing second-level geographical coverage area of the EHR is a geographical coverage area corresponding to an existing third electronic horizon of the EHR, and a type of a map element included in the third electronic horizon is the same as a type of the map element included in the second electronic horizon; and the constituting the second electronic horizon based on the information about the traveling path of the vehicle and the information about the sub-path of the traveling path includes: constituting the second electronic horizon based on the information about the traveling path of the vehicle and the information about the sub-path of the traveling path in the incremental range.

In this implementation, a geographical coverage area corresponding to the constituted second electronic horizon is expected by the EHR.

In a possible implementation, the first message further includes at least one of the following: second map element information, where the second map element indicates the map element corresponding to the second electronic horizon; second limitation information, where the second limitation information is used to limit or indicate a data volume of the second electronic horizon; and second path identification information, where the second path identification information indicates a path included in the second electronic horizon.

In this implementation, the first message further includes at least one of the second map element information, the second path identification information, or the second limitation information. Map data requested by the EHR is further limited, so that the EHP can provide map data required by the EHR.

According to a fourth aspect, an embodiment of this application provides another map data level-based transmission method. The method is applied to a vehicle, and the method includes: determining whether the vehicle travels out of a geographical coverage area corresponding to a second electronic horizon; and performing path planning based on a first electronic horizon and sensing data when the vehicle travels out of the geographical coverage area corresponding to the second electronic horizon, where the sensing data is data obtained by sensing an ambient environment of the vehicle, a geographical coverage area corresponding to the first electronic horizon is greater than and includes the geographical coverage area corresponding to the second electronic horizon; and a map element included in the first electronic horizon is different from a map element included in the second electronic horizon, and/or precision of the first electronic horizon is lower than precision of the second electronic horizon.

In this embodiment of this application, when the vehicle travels out of the geographical coverage area corresponding to the second electronic horizon, path planning is performed based on the first electronic horizon and the sensing data. This can resolve a problem that no map data is available after the vehicle travels out of the geographical coverage area corresponding to the second electronic horizon.

In a possible implementation, the method further includes: performing path planning based on the second electronic horizon and sensing data when the vehicle does not travel out of the geographical coverage area corresponding to the second electronic horizon. For example, path planning is performed based on the second electronic horizon, the first electronic horizon, and the sensing data.

In this implementation, path planning performed based on the second electronic horizon and the sensing data is more appropriate and secure than path planning performed based on the first electronic horizon.

In a possible implementation, the method further includes: navigating the vehicle to a destination based on the second electronic horizon when the vehicle does not travel out of the geographical coverage area corresponding to the second electronic horizon. For example, the vehicle is navigated to the destination based on the first electronic horizon and the second electronic horizon.

In this implementation, the vehicle is navigated to the destination based on the second electronic horizon, so that driving safety of the vehicle can be improved.

In a possible implementation, the method further includes: navigating the vehicle to a safe parking area based on the first electronic horizon when the vehicle travels out of the geographical coverage area corresponding to the second electronic horizon.

In this implementation, the vehicle is navigated to the safe parking area based on the first electronic horizon, to ensure safety of the vehicle and a passenger.

In a possible implementation, the method further includes: determining a position of the vehicle based on the first electronic horizon when the vehicle travels out of the geographical coverage area corresponding to the second electronic horizon.

In this implementation, the position of the vehicle is determined based on the first electronic horizon. This can resolve a problem that the position of the vehicle cannot be determined after the vehicle travels out of the geographical coverage area corresponding to the second electronic horizon.

In a possible implementation, the method further includes: performing planning and control on the vehicle based on the second electronic horizon before the vehicle travels out of the geographical coverage area corresponding to the second electronic horizon.

According to a fifth aspect, an embodiment of this application provides a data processing apparatus. The data processing apparatus has a function of implementing behavior in the method embodiment according to the second aspect. The data processing apparatus may alternatively be a terminal device, or may be a component (for example, a processor, a chip, or a chip system) of the terminal device, or may be a logical module or software that can implement all or some functions of the terminal device. For example, the data processing apparatus is an EHR deployed on a vehicle. The function of the data processing apparatus may be implemented by hardware, or may be implemented by hardware by executing corresponding software. The hardware or the software includes one or more modules or units corresponding to the functions. In a possible implementation, the data processing apparatus includes a transceiver module and a processing module. The transceiver module is configured to receive a first electronic horizon from an EHP, and receive a second electronic horizon from the EHP. A geographical coverage area corresponding to the first electronic horizon is greater than and includes a geographical coverage area corresponding to the second electronic horizon; and a map element included in the first electronic horizon is different from a map element included in the second electronic horizon, and/or precision of the first electronic horizon is lower than precision of the second electronic horizon. The processing module is configured to parse the first electronic horizon. The processing module is further configured to parse the second electronic horizon.

In a possible implementation, the transceiver module is further configured to send a first message to the EHP, where the first message is used to request the first electronic horizon and/or the second electronic horizon, the first message includes at least one of position information and range information of a vehicle, the range information indicates the geographical coverage area corresponding to the first electronic horizon and/or the geographical coverage area corresponding to the second electronic horizon, and the EHR is deployed on the vehicle.

In a possible implementation, the transceiver module is specifically configured to: send the first message to the EHP before the vehicle travels out of a geographical coverage area corresponding to a third electronic horizon, where the first message is an update request message, the first message is used to request the second electronic horizon, a type of a map element included in the third electronic horizon is the same as a type of the map element included in the second electronic horizon, a partial geographical coverage area in the geographical coverage area corresponding to the second electronic horizon is not included in the geographical coverage area corresponding to the third electronic horizon, and the geographical coverage area corresponding to the first electronic horizon is greater than and includes the geographical coverage area corresponding to the third electronic horizon.

In a possible implementation, the processing module is further configured to: determine an incremental range of a second-level geographical coverage area based on the second-level geographical coverage area expected by the EHR and an existing second-level geographical coverage area of the EHR, where the existing second-level geographical coverage area of the EHR is the geographical coverage area corresponding to the third electronic horizon; and generate the first message based on the incremental range, where the range information included in the first message indicates the incremental range.

In a possible implementation, the transceiver module is specifically configured to: send the first message to the EHP after the vehicle travels out of a geographical coverage area corresponding to a third electronic horizon, where the first message is an update request message, the first message is used to request the second electronic horizon, a type of a map element included in the third electronic horizon is the same as a type of the map element included in the second electronic horizon, and a partial geographical coverage area in the geographical coverage area corresponding to the second electronic horizon is not included in the geographical coverage area corresponding to the third electronic horizon.

For possible implementations of the data processing apparatus in the fifth aspect, refer to the possible implementations of the second aspect.

For technical effect brought by the fourth aspect or the possible implementations of the fifth aspect, refer to descriptions of the technical effect brought by the possible implementations of the second aspect.

According to a sixth aspect, an embodiment of this application provides a data processing apparatus. The data processing apparatus has a function of implementing behavior in the method embodiment according to the third aspect. The data processing apparatus may be a network device, or may be a component (for example, a processor, a chip, or a chip system) of the network device, or may be a logical module or software that can implement all or some functions of the network device. For example, the data processing apparatus is a cloud server, or a processor, a chip, or a chip system in the cloud server. The data processing apparatus may be a terminal device, or may be a component (for example, a processor, a chip, or a chip system) of the terminal device, or may be a logical module or software that can implement all or some functions of the terminal device. For example, the data processing apparatus is an EHP deployed on a vehicle. The function of the data processing apparatus may be implemented by hardware, or may be implemented by hardware by executing corresponding software. The hardware or the software includes one or more modules or units corresponding to the functions. In a possible implementation, the data processing apparatus includes a transceiver module and a processing module. The processing module is configured to: constitute a first electronic horizon; and constitute a second electronic horizon. The transceiver module is configured to: send the first electronic horizon to an EHR; and send the second electronic horizon to the EHR. A geographical coverage area corresponding to the first electronic horizon is greater than and includes a geographical coverage area corresponding to the second electronic horizon; and a map element included in the first electronic horizon is different from a map element included in the second electronic horizon, and/or precision of the first electronic horizon is lower than precision of the second electronic horizon.

In a possible implementation, the transceiver module is further configured to receive a first message from the EHR, where the first message is used to request the first electronic horizon and/or the second electronic horizon, the first message includes at least one of position information and range information of the vehicle, the range information indicates the geographical coverage area corresponding to the first electronic horizon and/or the geographical coverage area corresponding to the second electronic horizon, and the EHR is deployed on the vehicle. The processing module is further configured to send the first electronic horizon and/or the second electronic horizon to the EHR based on the first message through the transceiver module

In a possible implementation, the first message is an initialization request message, the first message is used to request the first electronic horizon and the second electronic horizon, and the first message includes the position information of the vehicle. The processing module is further configured to: determine a traveling path of the vehicle based on the position information of the vehicle; constitute the second electronic horizon based on information about the traveling path and information about a sub-path of the traveling path; and constitute the first electronic horizon based on topology information of a road connected to the traveling path of the vehicle.

In a possible implementation, the first message is an update request message, and the first message is used to request the second electronic horizon. The processing module is further configured to constitute the second electronic horizon based on information about a traveling path of the vehicle and information about a subpath of the traveling path.

In a possible implementation, the first message further includes the traveling path of the vehicle. The processing module is further configured to determine, based on the traveling path of the vehicle, the geographical coverage area corresponding to the second electronic horizon.

In a possible implementation, the first message further includes the traveling path of the vehicle. The processing module is further configured to determine, based on the traveling path of the vehicle, a path included in the second electronic horizon.

In a possible implementation, the range information indicates an incremental range of a second-level geographical coverage area expected by the EHR relative to an existing second-level geographical coverage area of the EHR, the existing second-level geographical coverage area of the EHR is a geographical coverage area corresponding to an existing third electronic horizon of the EHR, and a type of a map element included in the third electronic horizon is the same as a type of the map element included in the second electronic horizon. The processing module is specifically configured to constitute the second electronic horizon based on the information about the traveling path of the vehicle and the information about the sub-path of the traveling path in the incremental range.

For possible implementations of the data processing apparatus in the sixth aspect, refer to the possible implementations of the third aspect.

For technical effect brought by the fourth aspect or the possible implementations of the sixth aspect, refer to descriptions of the technical effect brought by the possible implementations of the third aspect.

According to a seventh aspect, an embodiment of this application provides a data processing apparatus. The data processing apparatus has a function of implementing behavior in the method embodiment according to the fourth aspect. The data processing apparatus may be a terminal device, or may be a component (for example, a processor, a chip, or a chip system) of the terminal device, or may be a logical module or software that can implement all or some functions of the terminal device. For example, the data processing apparatus is an automotive. The function of the data processing apparatus may be implemented by hardware, or may be implemented by hardware by executing corresponding software. The hardware or the software includes one or more modules or units corresponding to the functions. In a possible implementation, the data processing apparatus includes a transceiver module and a processing module. The transceiver module is configured to receive a first electronic horizon and a second electronic horizon. The processing module is configured to: determine whether a vehicle travels out of a geographical coverage area corresponding to the second electronic horizon; and perform path planning based on the first electronic horizon and sensing data when the vehicle travels out of the geographical coverage area corresponding to the second electronic horizon, where the sensing data is data obtained by sensing an ambient environment of the vehicle, a geographical coverage area corresponding to the first electronic horizon is greater than and includes the geographical coverage area corresponding to the second electronic horizon; and a map element included in the first electronic horizon is different from a map element included in the second electronic horizon, and/or precision of the first electronic horizon is lower than precision of the second electronic horizon.

In a possible implementation, the processing module is further configured to perform path planning based on the second electronic horizon and sensing data when the vehicle does not travel out of the geographical coverage area corresponding to the second electronic horizon.

In a possible implementation, the processing module is further configured to navigate the vehicle to a destination based on the second electronic horizon when the vehicle does not travel out of the geographical coverage area corresponding to the second electronic horizon.

In a possible implementation, the processing module is further configured to navigate the vehicle to a safe parking area based on the first electronic horizon when the vehicle travels out of the geographical coverage area corresponding to the second electronic horizon.

In a possible implementation, the processing module is further configured to determine a position of the vehicle based on the first electronic horizon when the vehicle travels out of the geographical coverage area corresponding to the second electronic horizon.

In a possible implementation, the processing module is further configured to perform planning and control on the vehicle based on the second electronic horizon before the vehicle travels out of the geographical coverage area corresponding to the second electronic horizon.

According to an eighth aspect, an embodiment of this application provides another data processing apparatus. The data processing apparatus includes one or more processors, and the one or more processors are configured to process data or signaling, to implement the method according to any one of the second aspect to the fourth aspect.

Optionally, the data processing apparatus further includes a memory. The memory stores a program or instructions. When the program or the instructions are executed by the processor, the data processing apparatus is enabled to perform the method according to any one of the second aspect to the fourth aspect. For example, the data processing apparatus may be a chip, the processor is a processing circuit in the chip, and the memory is a random access memory or a cache in the chip.

In a possible implementation, in a process of performing the foregoing methods, a process of sending information (or a signal) in the foregoing methods may be understood as a process of outputting information based on instructions of the processor. When outputting the information, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

An operation like sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in the memory to perform these methods. For example, the processor may be further configured to execute the program stored in the memory. When the program is executed, the data processing apparatus is enabled to perform the method according to any one of the first aspect or the possible implementations of the first aspect.

In a possible implementation, the memory is located outside the data processing apparatus. In a possible implementation, the memory is located inside the data processing apparatus.

In a possible implementation, the processor and the memory may alternatively be integrated into one component, that is, the processor and the memory may alternatively be integrated together.

In a possible implementation, the data processing apparatus further includes a transceiver. The transceiver is configured to receive a signal, send a signal, or the like.

According to a ninth aspect, this application provides another data processing apparatus. The communication apparatus includes a processing circuit and an interface circuit. The interface circuit is configured to obtain data or output data. The processing circuit is configured to perform the method according to any one of the second aspect to the fourth aspect.

According to a tenth aspect, this application provides a computer-readable storage medium. The computer-readable storage medium stores a computer program, and the computer program includes program instructions. When the program instructions are executed, a computer is enabled to perform the method according to any one of the second aspect to the fourth aspect.

According to an eleventh aspect, this application provides a computer program product. The computer program product includes a computer program, and the computer program includes program instructions. When the program instructions are executed, a computer is enabled to perform the method according to any one of the second aspect to the fourth aspect.

According to a twelfth aspect, this application provides a chip, including a communication interface and a processor. The communication interface is configured to receive and send a signal of the chip. The processor is configured to execute computer program instructions, for a data processing apparatus including the chip to perform the method according to any one of the second aspect to the fourth aspect.

According to a thirteenth aspect, an embodiment of this application provides a map data updating system, including the data processing apparatus according to any one of the fifth aspect or the possible implementations of the fifth aspect, and the data processing apparatus according to any one of the sixth aspect or the possible implementations of the sixth aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1A is a diagram of an architecture of a map data updating system according to an embodiment of this application;
FIG. 1B is a diagram of an architecture of another map data updating system according to an embodiment of this application;
FIG. 2 is a diagram of two levels of map data according to an embodiment of this application;
FIG. 3 is a flowchart of a map data level-based transmission method according to an embodiment of this application;
FIG. 4 is a flowchart of another map data level-based transmission method according to an embodiment of this application;
FIG. 5 is a flowchart of another map data level-based transmission method according to an embodiment of this application;
FIG. 6 is a flowchart of another map data level-based transmission method according to an embodiment of this application;
FIG. 7 is a diagram of determining an incremental range corresponding to a second electronic horizon according to an embodiment of this application;
FIG. 8 is a flowchart of another map data level-based transmission method according to an embodiment of this application;
FIG. 9 is a flowchart of a vehicle control method according to an embodiment of this application;
FIG. 10 is a flowchart of another vehicle control method according to an embodiment of this application;
FIG. 11 is a diagram of a structure of a data processing apparatus 1100 according to an embodiment of this application;
FIG. 12 is a diagram of a structure of another data processing apparatus 120 according to an embodiment of this application; and
FIG. 13 is a diagram of a structure of another intelligent driving apparatus 130 according to an embodiment of this application.

### DESCRIPTION OF EMBODIMENTS

The terms "first", "second", and the like in the specification, claims, and accompanying drawings of this application are used to distinguish between different objects, but are not used to describe a specific sequence. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, devices that include a series of steps or units are not limited to listed steps or units, but optionally further include steps or units that are not listed, or optionally further include other steps or units inherent to these processes, methods, products, devices, or the like. In this specification, a name of each piece of information (or message) is used to distinguish between different pieces of information, and the name of each piece of information (or message) is not limited.

"Embodiment" in this specification means that a specific feature, structure, or characteristic described with reference to the embodiment may be included in at least one embodiment of this application. The phrase shown in various positions in the specification may neither necessarily mean a same embodiment, nor mean an independent or optional embodiment exclusive from another embodiment. It may be understood explicitly and implicitly by a person skilled in the art that embodiments described in the specification may be combined with another embodiment. One or more steps in this specification may constitute an embodiment.

Terms used in the following embodiments of this application are merely intended to describe specific embodiments, but are not intended to limit this application. The terms "a", "an", "the", "the foregoing", "the", and "this" of singular forms used in this specification and the appended claims of this application are also intended to include plural forms, unless otherwise specified in the context clearly. It should be further understood that the term "and/or" used in this application indicates and includes any or all possible combinations of one or more of listed items. For example, "A and/or B" may represent three cases: Only A exists, only B exists, and both A and B exist, where A and B may be singular or plural. The term "a plurality of" used in this application means two or more. In text descriptions of this application, a character "/" usually indicates an "or" relationship between associated objects.

It may be understood that, in embodiments of this application, "B corresponding to A" indicates that there is a correspondence between A and B, and B may be determined based on A. However, it should be further understood that determining (or generating) B according to (or based on) A does not mean that B is determined (or generated) according to (or based on) only A. B may alternatively be determined (or generated) according to (or based on) A and/or other information.

It should be understood that, in this application, the indication includes a direct indication (which is also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, preset, or preconfigured.

It should be understood that, in this application, that information C is used to determine information D includes that the information D is determined based on only the information C, and also includes that the information D is determined based on the information C and other information. In addition, that information C is used to determine information D may further include an indirect determining case. For example, the information D is determined based on information E, and the information E is determined based on the information C.

In addition, "a network element A sends information A to a network element B" in embodiments of this application may be understood as that a destination end of the information A or an intermediate network element on a transmission path to the destination end is the network element B, and may include directly or indirectly sending the information to the network element B. "The network element B receives the information A from the network element A" may be understood as that a source end of the information A or an intermediate network element on a transmission path to the source end is the network element A, and may include directly or indirectly receiving the information from the network element A. Necessary processing, such as a format change, may be performed on the information between the source end and the destination end for information sending. However, the destination end can understand valid information from the source end. A similar expression in this application may be understood similarly, and details are not described herein.

First, terms in this application are described and explained.

Advanced driver assistance system (advanced driver assistance system, ADAS): Various sensors mounted on a vehicle, such as monocular and binocular cameras, a millimeterwave radar, and a lidar, are used to continuously sense an ambient environment of a vehicle body and collect data to identify, detect, and track static and dynamic objects, and combine map data to perform real-time system fusion operation and analysis. In this way, a driver can be actively reminded during vehicle traveling, or partial control of the vehicle can be taken over to some extent, so that the driver can perceive a potential danger in advance, thereby effectively improving driving comfort and safety of the vehicle.

Autonomous driving system: The autonomous driving system is a driving system that implements real-time and continuous control on a vehicle. For example, an autonomous driving apparatus continuously senses an ambient environment of a vehicle body and collects data through various sensors mounted on the vehicle, such as monocular and binocular cameras, a millimeterwave radar, and a lidar, to identify, detect, and track static and dynamic objects, and combine map data to perform real-time system fusion operation and analysis, to implement real-time and continuous control on the vehicle. The autonomous driving system may control, based on different traveling scenarios on a traveling path, a vehicle configured with the autonomous driving system to perform corresponding traveling behaviors. For example, at a curve of the traveling path, the autonomous driving system may adjust a traveling behavior of the vehicle based on curvature of a road. For example, the autonomous driving system may adjust a steering direction, a steering angle, and a vehicle speed that are of the vehicle, so that the vehicle travels smoothly and safely.

EHP: The EHP is responsible for reading global map data, and integrating (reorganizing map elements in a specific format, for example, a format specified by the ADASIS) and outputting map data, namely, electronic horizon data, in a specific range in front of and around a vehicle based on a current vehicle position. The EHP may be named as an electronic horizon providing unit or an electronic horizon providing module. The EHP may be configured to provide information about a road ahead and data beyond a line of sight for an ADAS application. ADASIS is short for advanced driver assistance systems interface specifications (advanced driver assistance systems interface specifications). The ADASIS is an industry international standard formulated by the ADAS forum, and is a standard interface protocol for standardizing map data exchange between the map data and an ADAS application of a vehicle.

EHR: The EHR is responsible for parsing and reconstructing map data (electronic horizon data) sent by the EHP, and then sending reconstructed (or rebuilt) map data to an intelligent driving application, that is, inputting the reconstructed map data to intelligent driving modules such as a navigation module and a planning and control module for use. The EHR may be named as an electronic horizon reconstruction unit or an electronic horizon reconstruction module. The EHR may be configured to: parse a message sent by the EHP and reconstruct the map data. Reconstructed map data is used by an ADAS application module of the vehicle. In other words, the EHR may be configured to: parse the message sent by the EHP, reconstruct the map data into a data form that can be used by the autonomous driving system or the ADAS, convert the map data into a corresponding data form, and transmit the map data in the data form to an application layer.

A high-definition map (high-definition map, HD map) is an electronic map with high precision and a plurality of data dimensions. Specifically, precision of the high-definition map is at a centimeter level, and road elements and traffic-related dynamic elements in the high-definition map are richer, such as detailed lane lines, road signs, traffic signs, traffic lights, lane curvature, slope, and lane-level real-time traffic dynamic information. The high-definition map is mainly used for machine autonomous driving environment determining, decision-making, control, and the like.

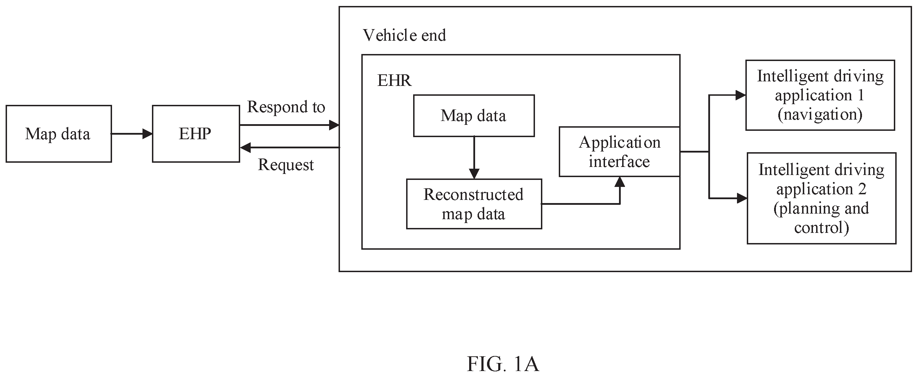

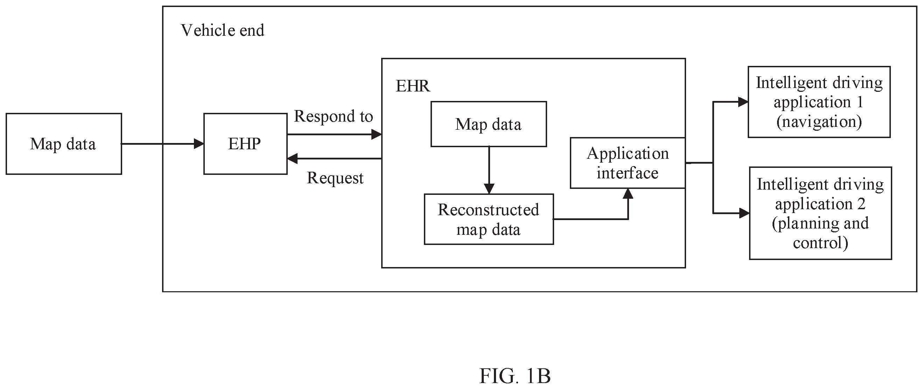

The following describes an architecture of a map data updating system to which the technical solutions of this application are applicable. FIG. 1A is a diagram of an architecture of a map data updating system according to an embodiment of this application. As shown in FIG. 1A, an EHR is deployed on a vehicle end (namely, a vehicle). For example, one or more processors in the vehicle end implement a function of the EHR. An EHP is deployed on a server (for example, a cloud server). The EHR may send a request message to the EHP, to request to update or initialize map data. The EHR is responsible for parsing (that is, data parsing) and reconstructing the map data (electronic horizon data) sent by the EHP, and then sending the reconstructed map data to intelligent driving applications, such as an intelligent driving application 1 and an intelligent driving application 2 shown in FIG. 1A, through an application interface. The EHP sends a response message to the EHR based on the request message sent by the EHR, to provide corresponding map data for the EHR. For example, the EHP reads global map data, and integrates and outputs map data in a specific range in front of and around the vehicle based on a current vehicle position. FIG. 1A is merely an example of the map data updating system provided in this application. A quantity of EHRs and a quantity of EHPs are not limited. FIG. 1B is a diagram of an architecture of another map data updating system according to an embodiment of this application. As shown in FIG. 1B, both an EHR and an EHP are deployed on a vehicle end (namely, a vehicle). The EHR may send a request message to the EHP, to request to update or initialize map data. The EHR is responsible for parsing and reconstructing the map data (electronic horizon data) sent by the EHP, and then sending the reconstructed map data to intelligent driving applications, such as an intelligent driving application 1 and an intelligent driving application 2 shown in FIG. 1B, through an application interface. The EHP sends a response message to the EHR based on the request message sent by the EHR, to provide corresponding map data for the EHR.

It should be noted that FIG. 1A and FIG. 1B are merely diagrams of architectures of the map data updating systems according to this application. The technical solutions of this application are applicable to any map data updating system including the EHR and the EHP, are also applicable to map data exchange between different apparatuses, and are further applicable to map data exchange between two components on a same apparatus (for example, an autonomous driving apparatus).

As described in the background, after the vehicle travels out of a range of original electronic horizon data, before the EHP releases updated electronic horizon data, no electronic horizon data is available for the vehicle. To resolve a problem that no electronic horizon data is available for the vehicle after the vehicle travels out of the range of the original electronic horizon data and before the EHP releases the updated electronic horizon data, this application provides a map data level-based transmission solution. A main idea of the map data level-based transmission solution provided in this application is as follows: The EHP divides map data into two or more levels of map data, where map elements in different levels of map data are not completely the same. The EHP may separately send a level of map data to the EHR, or may simultaneously send two or more levels of map data to the EHR, where at least two levels of map data correspond to different geographical coverage areas. The EHR may obtain two or more levels of map data corresponding to different geographical coverage areas. After the vehicle travels out of a geographical coverage area corresponding to a level of map data (for example, corresponding to existing electronic horizon data) whose corresponding geographical coverage area is small, the vehicle may perform navigation, positioning, parking, and the like based on another level of map data whose corresponding geographical coverage area is large. This can resolve a problem that no map data is available for the vehicle. It is assumed that the EHP sends a first electronic horizon and a second electronic horizon to the EHR, and a geographical coverage area corresponding to the first electronic horizon is greater than and includes a geographical coverage area corresponding to the second electronic horizon. After the vehicle travels out of the geographical coverage area corresponding to the second electronic horizon, the vehicle may perform navigation, positioning, and the like based on the first electronic horizon. This can resolve a problem that no map data is available after the vehicle travels out of the geographical coverage area corresponding to the second electronic horizon.

A manner in which the EHP divides the map data into three or more levels of map data is similar to a manner in which the EHP divides the map data into two levels of map data. The following uses an example in which the EHP divides the map data into two levels of map data (namely, the first electronic horizon and the second electronic horizon) for description. The geographical coverage area corresponding to the first electronic horizon is greater than and includes the geographical coverage area corresponding to the second electronic horizon, and a map element included in the first electronic horizon is not completely the same as a map element included in the second electronic horizon. The map element included in the first electronic horizon being not completely the same as the map element included in the second electronic horizon may indicate that the first electronic horizon and the second electronic horizon do not include a same map element, or some map elements in the first electronic horizon may be the same as some map elements in the second electronic horizon. For example, both the first electronic horizon and the second electronic horizon are electronic horizon data. For example, the first electronic horizon is upper-level electronic horizon data, and the second electronic horizon is bottom-level electronic horizon data.

For example, the first electronic horizon may be used for at least one of the following: providing road prior information for the vehicle, so that the vehicle fuses the first electronic horizon and sensor data (that is, data collected by the vehicle through a deployed sensor), to enhance reliability of intelligent driving or assisted driving; vehicle navigation, to be specific, the vehicle performs navigation based on the first electronic horizon; and vehicle positioning, to be specific, the vehicle learns, based on the first electronic horizon, of a path in which the vehicle is located and offset information on the path, to implement quick positioning. The first electronic horizon may further have other usage (or functions). This is not limited in this application.

For example, the map element (or profile) included in the first electronic horizon includes at least one of the following:

### (1) Road topology information

Road geometry (road geometry) includes a road reference line (generally a road center line), for example, is expressed in a form of polyline (position coordinates of polyline vertices are stored in sequence); and
a node (node) includes at least one of an identifier (identifier, ID), a turning angle, right of way, or the like of a sub-path connected to the node.

### (2) Road traveling rule

Traffic restrictions: whether a road is passable and traffic conditions (including a type of a vehicle that can be passed, passable time, vehicle load, a vehicle height, a weather condition, and the like);
an overtaking restriction: a sign indicating whether overtaking is allowed on the road;
a turning restriction: a sign indicating whether turning is allowed on the road;
priority of the road during path planning; and
special road situations: special road situations that seldom occur, such as dead-end roads, toll stations, and speed bumps.

### (3) Traffic flow

A speed limit of a road; and
a traffic flow speed (an average traffic flow speed derived from historical data).

The first electronic horizon further includes another map element. A type of the map element included in the first electronic horizon is not limited in this application.

For example, the initialization request message or the update request message sent by the EHR carries first map element information, and the first map element information indicates the map element corresponding to the first electronic horizon. The EHP sends, to the EHR based on the initialization request message or the update request message, the first electronic horizon including the corresponding map element.

For example, the second electronic horizon may be used for at least one of the following: vehicle planning and control, autonomous driving, or another application that can be implemented by the vehicle only by using a high-precision map. In a possible implementation, the second electronic horizon is a high-definition map, and a geographical coverage area corresponding to the high-definition map is the geographical coverage area corresponding to the second electronic horizon. Before the vehicle travels out of the geographical coverage area corresponding to the second electronic horizon, the vehicle may implement an application that can be implemented only by using the high-definition map. In a possible implementation, the second electronic horizon and the first electronic horizon jointly constitute a high-precision map, and the first electronic horizon may be independently used as a non-high-precision map (namely, a low-precision map). A geographical coverage area corresponding to the high-definition map is the geographical coverage area corresponding to the second electronic horizon, and a geographical coverage area corresponding to the non-high-definition map is the geographical coverage area corresponding to the first electronic horizon. Before the vehicle travels out of the geographical coverage area corresponding to the second electronic horizon, the vehicle may implement an application that can be implemented only by using the high-definition map. After the vehicle travels out of the geographical coverage area corresponding to the second electronic horizon, and before the vehicle travels out of the geographical coverage area corresponding to the first electronic horizon, the vehicle cannot implement an application that can be implemented only by using the high-definition map, but can implement, based on the first electronic horizon, some driving-related applications such as navigation and positioning that can be implemented without the high-definition map. For example, the first electronic horizon is organized and released in a large range in a form of image/path, and the second electronic horizon is organized and released in a small range in a form of path, and is updated based on a vehicle position.

For example, the map element included in the second electronic horizon includes at least one of the following:

### (1) Lane information

Lanes geometry (lanes geometry): a linear object like a lane line, for example, is expressed in a form of polyline (position coordinates of polyline vertices are stored in sequence);
a lane model (lane model): a quantity of lanes, a lane type, a traveling direction, left and right lane lines associated with the vehicle, and a lane center line; and
lane connectivity (lane connectivity): a connection relationship between lanes at a diverging and merging point.

### (2) Positioning information

Information about a sign: for example, a type and/or a position of a rod or a sign; and
information about an obstacle: a shape and a position of the obstacle.

(3) Traffic-related information

Speed limit information: speed limits of different types of vehicles;
a real-time traffic flow speed;
information about a traffic light: a position, a cycle, and a current status of the traffic light; and
a traffic sign (traffic sign).

### (4) Features

Whether it is a complex intersection;
a map database corresponding to a specific road section;
road type information: a road type, for example, a tunnel or a bridge;
whether there are buildings on a roadside;
whether a road is an urban road;
road surface information: a material and quality of a road surface;
weather information; and
road condition (road condition) information: real-time road and weather conditions.

The second electronic horizon further includes another map element. A type of the map element included in the second electronic horizon is not limited in this application. The type of the map element included in the second electronic horizon and the type of the map element included in the first electronic horizon may overlap or may not overlap. For example, the EHP and the EHR may pre-negotiate a map element included in map data at each level. For example, a user may set, based on an application, the map element included in map data at each level. For example, to enable the first electronic horizon to support the vehicle to perform navigation, the user sets that the first electronic horizon includes map elements such as the road topology information, the road traveling rule, and the traffic flow. To enable the second electronic horizon to support to vehicle to perform planning and control, the user sets that the second electronic horizon includes map elements such as the lanes geometry, the positioning information, the traffic-related information, and the features. For example, the initialization request message sent by the EHR carries first map element information and second map element information, the first map element information indicates the map element included in the first electronic horizon, and the second map element information indicates the map element included in the second electronic horizon. The EHP sends, to the EHR based on the initialization request message, the first electronic horizon and the second electronic horizon that include the corresponding map elements. For example, the update request message sent by the EHR carries second map element information, and the second map element information indicates the map element corresponding to the second electronic horizon. The EHP sends, to the EHR based on the update request message, the second electronic horizon including the corresponding map element.

A difference between the first electronic horizon and the second electronic horizon mainly includes at least one of the following: The map element included in the first electronic horizon is different from the map element included in the second electronic horizon; when a data volume of the first electronic horizon is equal to a data volume of the second electronic horizon, the geographical coverage area corresponding to the first electronic horizon is greater than the geographical coverage area corresponding to the second electronic horizon; and the map element included in the first electronic horizon is a map element required by the vehicle to execute (implement) a first application, the map element included in the second electronic horizon is a map element required by the vehicle to execute a second application, the first application includes positioning and/or navigation, and the second application includes planning and control. For example, the map element included in the first electronic horizon is the map element required by the vehicle to execute the first application, and the map element included in the second electronic horizon is the map element required by the vehicle to execute the second application. Before traveling out of the geographical coverage area corresponding to the second electronic horizon, the vehicle may execute the second application based on the second electronic horizon and the first electronic horizon (optional). After traveling out of the geographical coverage area corresponding to the second electronic horizon, the vehicle may execute the first application based on the first electronic horizon, and cannot execute the second application based on the first electronic horizon. For example, before traveling out of the geographical coverage area corresponding to the second electronic horizon, the vehicle may execute N applications in total based on the second electronic horizon and the first electronic horizon (optional), that is, an application #1, an application #2, ..., and an application N, where N is an integer greater than 1. After traveling out of the geographical coverage area corresponding to the second electronic horizon, the vehicle may execute some of the N applications based on the first electronic horizon.

In some possible implementations, the EHR may send a request message (or a request instruction) to the EHP to request the required first electronic horizon and/or the required second electronic horizon. For example, the EHR sends an initialization request message to the EHP, to request the first electronic horizon and the second electronic horizon. For another example, the EHR sends an update request message to the EHP, to request the second electronic horizon and further update the second electronic horizon. To enable the map data returned by the EHP to be organized in a level-based manner based on a requirement of the EHR, the request message sent by the EHR to the EHP should also include level information. The following provides possible structures of the initialization request message (InitializationMessage) and the update request message (UpdateMessage) that are sent by the EHR, and possible structures of a path control message (PathControlMessage) a profile control message (ProfileControlMessage), and a profile message (ProfileMessage) that are sent by the EHP for the request message from the EHR.

For example, the initialization request message (InitializationMessage) sent by the EHR includes one or more of the following fields:
ServerID: an ID or an address of a server (namely, the EHP);
ClientID: an ID or an address of a client (namely, the EHR);
CurrentVehiclePosition: a current vehicle position, for example, including an absolute position of the vehicle (coordinates of the vehicle in a global positioning system (global positioning system, GPS)) and a vehicle orientation (an angle at which the vehicle turns clockwise from due north);
Level: a level ID array, for example, {0, 1}, where 0 indicates a first level (corresponding to the first electronic horizon), and 1 indicates a second level (corresponding to the second electronic horizon);
StorageLimit (data volume limit): a data volume limit of map data at each level, expressed in KB;
HorizonRange: a geographical coverage area corresponding to map data at each level, for example, may be expressed by using a polygon (in a vehicle coordinate system, a polygon vertex is expressed as a point coordinate sequence relative to the vehicle) or a path length (an ID of each path and a start offset and an end offset of the path), and can be arranged in a level ID sequence, where the level ID sequence is a sequence of layers in the layer ID array; and
ProfileDataFilter: includes a plurality of profile filters (profile filters), where the plurality of profile filters are configured to set types (or categories) of map elements included in map data at each level, and are arranged in a level ID sequence.

For example, the update request message (UpdateMessage) includes one or more of the following fields:
ServerID: an ID or an address of a server (namely, the EHP);
ClientID: an ID or an address of a client (namely, the EHR);
CurrentVehiclePosition: a current vehicle position, for example, including a relative position (an ID of a path (path) on which the vehicle is located and an offset of the vehicle on the path), a vehicle orientation (an angle at which the vehicle turns clockwise from due north), and an absolute position (coordinates of the vehicle in the GPS);
Level: a level ID array, for example, {0, 1}, where 0 indicates a first level (corresponding to the first electronic horizon), and 1 indicates a second level (corresponding to the second electronic horizon);
StorageLimit: a data volume limit of map data at each level, expressed in KB;
HorizonRange: an incremental range of map data at each level, may be expressed by using a polygon (in a vehicle coordinate system, a polygon vertex is expressed as a point coordinate sequence relative to the vehicle) or a path range (an ID of each path and a start offset and an end offset of an incremental segment of the path), and can be arranged in a level ID sequence; and
ProfileDataFilter: includes a plurality of profile filters (profile filters) (which are configured to set types of map elements included in map data at each level, and are arranged in a level ID sequence) and a plurality of path filters (PathFilter). (which are configured to set a path included in the map data at each level, are expressed as an ID array of a plurality of paths, and are arranged in a level ID sequence).

For example, the path control message (PathControlMessage) carries all paths in the map data and a parent-child relationship of the paths. The vehicle end may delete a path that is not in the path control message. The path control message includes one or more of the following fields:
Level: a level ID;
PathIDFirst: an ID of the first path recorded in the path control message;
PathIDLast: an ID of the last path recorded in the path control message; and
PathControls: an array of a path control (PathControl) structure, and an ID of a parent path of each path and an offset of a start position of the path on the parent path are stored in a path ID sequence. An example of the PathControl structure is as follows:

```
 struct PathControl {
 PathID id
 ParentID id
Offset offset
}
```

Herein, PathID id is an ID of a path, ParentID id is an ID of a parent path of the path, and Offset offset is an offset of a start position of the path on the parent path.

For example, the profile control message (ProfileControlMessage) carries start offsets of an electronic horizon on all paths. The profile control message includes one or more of the following fields:
Level: a level ID; and
ProfileControls: an array of a profile control (ProfileControl) structure, and the start offsets of the electronic horizon on all paths are stored in a path ID sequence. An example of the ProfileControl structure is as follows:

```
 struct ProfileControl {
  PathID id
  Offset offset
 }
```

Herein, PathID id is an ID of a path, and Offset offset is a start offset of the electronic horizon on the path.

For example, the profile message (ProfileMessage) includes detailed information of some or all map elements in the map data. The profile message includes one or more of the following fields:
Level: a level ID; and
ProfileEntrys: an array of a ProfileEntry structure, and positions and values of the some or all map elements are stored. An example of the ProfileEntry structure is as follows:

```
 struct ProfileEntry {
 InstanceID id
 PathID id
 StartOffset offset
EndOffset offset
 ProfileType type
 ProfileValue value
 }
```

Herein, InstanceID id is an ID of a map element, PathID id is an ID of a path corresponding to the map element, StartOffset offset indicates a start offset of the map element on the path, that is, an offset of the map element relative to a start position of the path, EndOffset offset indicates an end offset of the map element on the path, that is, an offset of the map element relative to an end position of the path, ProfileType type indicates a type of the map element, and PrfileValue value indicates a value of the map element.

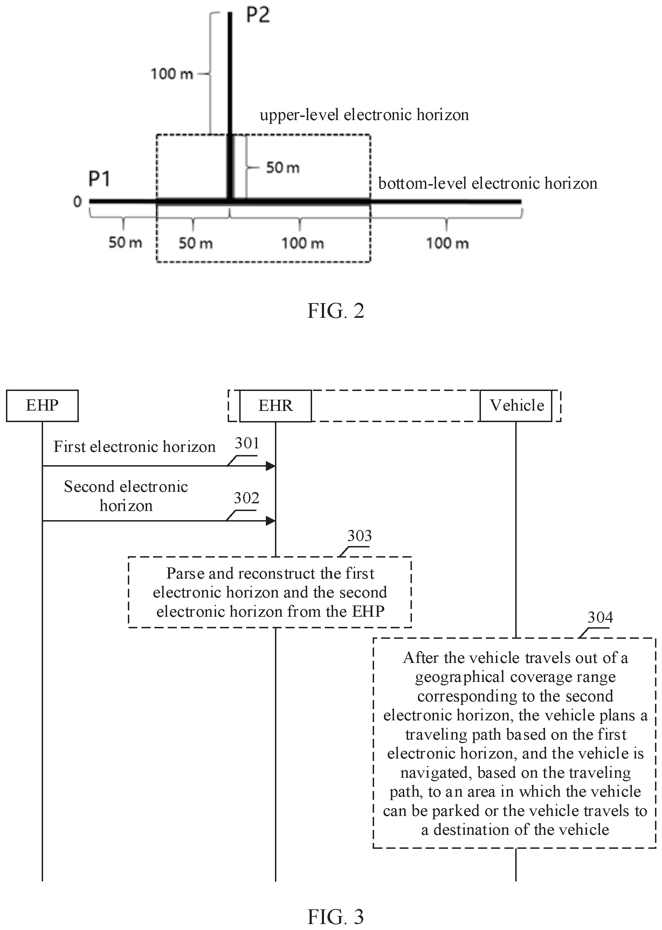

Examples of the foregoing messages are described by using an example in which the EHR requests and the EHP sends two levels of map data (or two levels of electronic horizons) shown in FIG. 2. FIG. 2 is a diagram of two levels of map data according to an embodiment of this application. As shown in FIG. 2, a second electronic horizon (namely, an upper-level electronic horizon in FIG. 2) is framed by a dashed line, a map element included in the second electronic horizon is a real-time traffic flow speed FlowSpeed, a map element included in a first electronic horizon (namely, a bottom-level electronic horizon in FIG. 2) is an average traffic flow speed AverageSpeed, P1 indicates a path whose ID is 1, and P2 indicates a path whose ID is 2. The following provides examples of a request message used by the EHR and a message sent by the EHP.

An example of the initialization request message (InitializationMessage) sent by the EHR is as follows:
ServerID 1, where 1 is an ID of the EHR;
ClientID 2, where 2 is an ID of the EHP;
CurrentVehiclePosition {51.65, 5.91, 89.43} #: longitude, latitude, and orientation, where {51.65, 5.91, 89.43} indicates a current vehicle position, 51.65 indicates longitude of the vehicle, 5.91 indicates latitude of the vehicle, and 89.43 indicates an orientation of a vehicle head;
Level {0, 1} # 0: a first level, 1: a second level;
StorageLimit {0.5, 0.5}, where a data volume of the first electronic horizon is limited to be less than or equal to 0.5 KB, and a data volume of the second electronic horizon is limited to be less than or equal to 0.5 KB;
HorizonRange {[1, 0, 300], [2, 0, 150]}, {[1, 50, 200], [2, 0, 50]} # is expressed based on a path range, where {[1, 0, 300], [2, 0, 150]} indicates a geographical coverage area corresponding to the first electronic horizon, and {[1, 50, 200], [2, 0, 50]} indicates a geographical coverage area corresponding to the second electronic horizon; and
ProfileDataFilter {AverageSpeed}, {FlowSpeed}, where AverageSpeed is an example of a map element included in the first electronic horizon, and FlowSpeed is an example of a map element included in the second electronic horizon. ProfileDataFilter is configured to set types of map elements included in the map data at each level. In a possible implementation, ProfileDataFilter includes types of all map elements that need to be included in the first electronic horizon, and types of all map elements that need to be included in the second electronic horizon. For example, ProfileDataFilter in the initialization request message is {information #1, information #2, information #3, ..., information #M}, and {information #N, information # (N+1), information # (N+2), ..., information # (N+K)}. Each of the information #1, the information #2, the information #3, ..., and the information #M indicates a map element that needs to be included in the first electronic horizon, and each of the information #N, the information # (N+1), the information # (N+2), ..., and the information # (N+K) indicates a map element that needs to be included in the second electronic horizon. Herein, N, M, and K are all integers greater than 0, and a value relationship between M and N is not limited. For example, ProfileDataFilter further includes a path that needs to be included in the first electronic horizon and a path that needs to be included in the second electronic horizon.

Some or all of StorageLimit {0.5, 0.5}, Level {0, 1}, HorizonRange {[1, 0, 300], [2, 0, 150]}, {[1, 50, 200], [2, 0, 50]}, or ProfileDataFilter {AverageSpeed}, {FlowSpeed} are optional. In this example, the geographical coverage area corresponding to the first electronic horizon and the geographical coverage area corresponding to the second electronic horizon are expressed based on a path range. In the initialization request message, the geographical coverage area corresponding to the first electronic horizon and the geographical coverage area corresponding to the second electronic horizon may alternatively be expressed in another manner. This is not limited in this application. For example, the geographical coverage area corresponding to the first electronic horizon is expressed by using a group of polygon vertices, and the geographical coverage area corresponding to the second electronic horizon is expressed by using another group of polygon vertices. CurrentVehiclePosition may further include a relative position of the vehicle, an ID of a path on which the vehicle is located, and an offset of the vehicle on the path. For example, CurrentVehiclePosition includes only a relative position of the vehicle, for example, an ID of a path on which the vehicle is located and an offset of the vehicle on the path, but does not include an absolute position (for example, the longitude and the latitude in the example) of the vehicle.

An example of the update request message (UpdateMessage) sent by the EHR is as follows:
ServerID 1, where 1 is an ID of the EHR;
ClientID 2, where 2 is an ID of the EHP;
CurrentVehiclePosition {1, 0, 89.43} # path ID, offset, and orientation, where 1 in {1, 0, 89.43} indicates an ID of a path on which the vehicle is located, 0 in {1, 0, 89.43} indicates an offset of the vehicle on the path, and 89.43 indicates an orientation of a vehicle head (an angle at which the vehicle turns clockwise from due north);
Level {0, 1} # 0: a first level, 1: a second level;
StorageLimit {0.5, 0.5}, where a data volume of the first electronic horizon is limited to be less than or equal to 0.5 KB, and a data volume of the second electronic horizon is limited to be less than or equal to 0.5 KB;
HorizonRange {(0, 0), (300, 0), (300, 150), (0, 150)}, {(50, 0), (200, 0), (200, 50), (50, 50)} # is expressed by using polygon vertices, where {(0, 0), (300, 0), (300, 150), (0, 150)} indicates an incremental geographical coverage area corresponding to the first electronic horizon (that is, a geographical coverage area newly added based on the original geographical coverage area corresponding to the first electronic horizon), and{(50, 0), (200, 0), (200, 50), (50, 50)} indicates an incremental geographical coverage area corresponding to the second electronic horizon; and
ProfileDataFilter {AverageSpeed}, {FlowSpeed}, {1, 2}#1, {1, 2}#2, where AverageSpeed is an example of a map element included in the first electronic horizon, FlowSpeed is an example of a map element included in the second electronic horizon, {1, 2}#1 indicates that the first electronic horizon needs to include a path whose ID is 1 and a path whose ID is 2, and {1, 2}#2 indicates that the second electronic horizon needs to include a path whose ID is 1 and a path whose ID is 2. In a possible implementation, ProfileDataFilter includes types of all map elements that need to be included in the first electronic horizon, and types of all map elements that need to be included in the second electronic horizon.

An example of the path control message (PathControlMessage) sent by the EHP is as follows:
Level 0: indicates a first level;
PathIDFirst 1: indicates that an ID of the first path recorded in the path control message is 1;
PathIDLast 2: indicates that an ID of the last path recorded in the path control message is 2;
PathControls {2, 1, 100}: indicates an offset of a start position of a path whose ID is 1 on a parent path (whose ID is 2) of the path;
Level 1: indicates a second level;
PathIDFirst 1: indicates that an ID of the first path recorded in the path control message is 1;
PathIDLast 2: indicates that an ID of the last path recorded in the path control message is 2; and
PathControls {2, 1, 100}: indicates an offset of a start position of a path whose ID is 1 on a parent path (whose ID is 2) of the path.

The path control message sent by the EHP may store, in a path ID sequence, an ID of a parent path of each path and an offset of a start position of the path on the parent path. A quantity of paths stored in the path control message is not limited.

An example of the profile control message (ProfileControlMessage) sent by the EHP is as follows:
Level 0: indicates a first level;
ProfileControls {1, 0}, {2, 0}, where {1, 0} indicates that an offset of the electronic horizon on a path whose ID is 1 is 0, and {2, 0} indicates that an offset of the electronic horizon on a path whose ID is 2 is 0.
Level 1: indicates a second level; and
ProfileControls {1, 50}, {2, 0}, where {1, 50} indicates that an offset of the electronic horizon on a path whose ID is 1 is 50, and {2, 0} indicates that an offset of the electronic horizon on a path whose ID is 2 is 0.

An example of the profile message (ProfileMessage) sent by the EHP is as follows:
Level 0: indicates a first level;
ProfileEntrys {1, 1, 0, 300, AverageSpeed, 30}, {1, 2, 0, 150, AverageSpeed, 30}, where {1, 1, 0, 300, AverageSpeed, 30} indicates that a valid data range of a profile (namely, an average speed) whose profile ID is 1 is 0 m to 300 m on a path whose ID is 1, a value of the profile whose profile ID is 1 is 30 kph, {1, 2, 0, 150, AverageSpeed, 30} indicates that a valid data range of a profile (namely, an average speed) whose profile ID is 1 is 0 m to 150 m on a path whose ID is 2, and a value of the profile whose profile ID is 1 is 30 kph;
Level 1: indicates a second level; and
ProfileEntrys {2, 1, 50, 200, FlowSpeed, 40}, {2, 2, 0, 50, FlowSpeed, 40}, where {2, 1, 50, 200, FlowSpeed, 40} indicates that a valid data range of a profile (namely, a real-time traffic flow speed) whose profile ID is 2 is 50 m to 200 m on a path whose ID is 1, a value of the profile whose profile ID is 2 is 40 kph, {2, 2, 0, 50, FlowSpeed, 40} indicates that a valid data range of a profile (namely, a real-time traffic flow speed) whose profile ID is 2 is 0 m to 50 m on a path whose ID is 2, and a value of the profile whose profile ID is 2 is 40 kph.

It should be noted that the foregoing level expression is not limited to "Level id=0, id=1 or id=2", and a name of a level may be alternatively customized, for example, "Level string=upper (corresponding to the second level), string=lower (corresponding to the first level)". Alternatively, a level is expressed in a form of bitmask (bitmask), for example, "Level bitmask=001, bitmask=010, bitmask=100", where each of 001, 010, and 100 indicates a level of map data. For example, 001 indicates the first electronic horizon, and 010 indicates the second electronic horizon.

The foregoing describes the map elements included in different levels of map data and the possible structures of the messages exchanged between the EHR and the EHP. The following describes the technical solutions provided in this application with reference to FIG. 3.

FIG. 3 is a flowchart of a map data level-based transmission method according to an embodiment of this application. As shown in FIG. 3, the method includes the following steps.

301: An EHP sends a first electronic horizon to an EHR.

Correspondingly, the EHR receives the first electronic horizon from the EHP.

302: The EHP sends a second electronic horizon to the EHR.

Correspondingly, the EHR receives the second electronic horizon from the EHP. A geographical coverage area corresponding to the first electronic horizon is greater than and includes a geographical coverage area corresponding to the second electronic horizon. A map element included in the first electronic horizon is different from a map element included in the second electronic horizon, and/or precision of the first electronic horizon is lower than precision of the second electronic horizon. In a possible implementation, after learning of a position of a vehicle on which the EHR is deployed, the EHR sends the first electronic horizon and the second electronic horizon to the EHR based on the position. A manner in which the EHR learns of the position of the vehicle is not limited in this application. For example, the EHR deployed on the vehicle sends, to the EHP, a message that carries position information of the vehicle. The EHP determines, based on the position information of the vehicle, the geographical coverage area corresponding to the first electronic horizon and the geographical coverage area corresponding to the second electronic horizon, and sends the first electronic horizon and the second electronic horizon to the EHP. In a possible implementation, after learning of the position and a traveling path of the vehicle on which the EHR is deployed, the EHR sends the first electronic horizon and the second electronic horizon to the EHR based on the position and the traveling path. A manner in which the EHR learns of the position and the traveling path of the vehicle is not limited in this application. For example, the EHR deployed on the vehicle sends, to the EHP, a message that carries position information of the vehicle and the traveling path of the vehicle. The EHP determines, based on the position information and the traveling path of the vehicle, the geographical coverage area corresponding to the first electronic horizon and the geographical coverage area corresponding to the second electronic horizon, and sends the first electronic horizon and the second electronic horizon to the EHP.

303: The EHR parses and reconstructs the first electronic horizon and the second electronic horizon from the EHP.

In a possible implementation, the map element included in the first electronic horizon includes at least one of the following: road topology information, a road traveling rule, and traffic flow information; and the map element included in the second electronic horizon includes at least one of the following: lane information, information about a sign, information about an obstacle, information about a traffic light, a traffic sign, a real-time traffic flow speed, speed limit information, weather information, road type information, road surface information, a map database corresponding to a road section, and road condition information.

In a possible implementation, after the EHR parses and reconstructs the first electronic horizon and the second electronic horizon from the EHP, the vehicle may perform planning and control based on the first electronic horizon and the second electronic horizon. That is, after the EHR parses and reconstructs the first electronic horizon and the second electronic horizon from the EHP, the vehicle may perform, based on the first electronic horizon and the second electronic horizon, an operation that can be performed only by using a high-definition map. The first electronic horizon and the second electronic horizon jointly constitute the high-definition map.

304: After the vehicle travels out of the geographical coverage area corresponding to the second electronic horizon, the vehicle plans the traveling path based on the first electronic horizon, and the vehicle is navigated, based on the traveling path, to an area in which the vehicle can be parked or the vehicle travels to a destination of the vehicle.

Step 303 and step 304 are optional steps. In this specification, an autonomous driving system or an ADAS may be deployed on the vehicle. In a possible implementation, the EHR receives the first electronic horizon and the second electronic horizon from the EHP, a high-precision map may be constituted based on the second electronic horizon and the first electronic horizon, and the first electronic horizon may also be independently used as a non-high-precision map (namely, a low-precision map). A geographical coverage area corresponding to the high-definition map is the geographical coverage area corresponding to the second electronic horizon, and a geographical coverage area corresponding to the non-high-definition map is the geographical coverage area corresponding to the first electronic horizon. Before the vehicle travels out of the geographical coverage area corresponding to the second electronic horizon, the vehicle may implement an application that can be implemented only by using the high-definition map. After the vehicle travels out of the geographical coverage area corresponding to the second electronic horizon and before the vehicle travels out of the geographical coverage area corresponding to the first electronic horizon, the vehicle cannot implement an application that can be implemented only by using the high-definition map, but can implement, based on the first electronic horizon, some driving-related applications that can be implemented without the high-definition map, such as navigation and positioning.

In this embodiment of this application, the geographical coverage area corresponding to the first electronic horizon is greater than and includes the geographical coverage area corresponding to the second electronic horizon. After the vehicle travels out of the geographical coverage area corresponding to the second electronic horizon, the vehicle may travel based on the first electronic horizon. This can resolve a problem that no map data is available after the vehicle travels out of the geographical coverage area corresponding to the second electronic horizon. For example, the vehicle plans the traveling path based on the first electronic horizon, and the vehicle is navigated, based on the traveling path, to the area in which the vehicle can be parked or the vehicle travels to the destination of the vehicle.

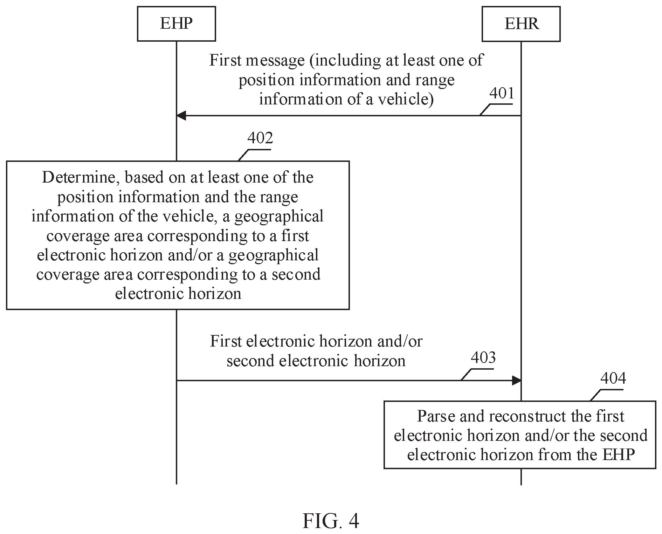

FIG. 4 is a flowchart of another map data level-based transmission method according to an embodiment of this application. In a method procedure in FIG. 4, an EHR sends a first message to an EHP, to request a first electronic horizon and/or a second electronic horizon; and the EHR may obtain required map data. As shown in FIG. 4, the method includes the following steps.

401: The EHR sends the first message to the EHP.

Correspondingly, the EHP receives the first message from the EHR. The first message is used to request the first electronic horizon and/or the second electronic horizon.

The first message includes at least one of position information and range information of a vehicle, the range information indicates a geographical coverage area corresponding to the first electronic horizon and/or a geographical coverage area corresponding to the second electronic horizon, and the EHR is deployed on the vehicle.

402: The EHP determines, based on at least one of the position information and the range information of the vehicle, the geographical coverage area corresponding to the first electronic horizon and/or the geographical coverage area corresponding to the second electronic horizon.

In a possible implementation, the EHP determines, based on the position information of the vehicle, the geographical coverage area corresponding to the first electronic horizon and/or the geographical coverage area corresponding to the second electronic horizon. For example, the EHP determines that the geographical coverage area corresponding to the first electronic horizon is a circular area (whose radius is predefined) with a position of the vehicle as a dot, and determines that the geographical coverage area corresponding to the first electronic horizon is a preset range in front of and around the vehicle. For another example, the EHP determines that the geographical coverage area corresponding to the first electronic horizon is a square area centered on a position of the vehicle (that is, the vehicle is located at an intersection point of diagonals of the square area), and determines that the geographical coverage area corresponding to the first electronic horizon is a preset range in front of and around the vehicle. For another example, the EHP determines a traveling path of the vehicle based on the position information of the vehicle, and determines, based on the traveling path and a sub-path of the traveling path, the geographical coverage area corresponding to the second electronic horizon; and determines, based on the traveling path and topology information of a road connected to the traveling path, the geographical coverage area corresponding to the first electronic horizon.

In a possible implementation, the EHP determines, based on the range information, the geographical coverage area corresponding to the first electronic horizon and/or the geographical coverage area corresponding to the second electronic horizon. For example, the range information indicates a geographical coverage area corresponding to map data at each level. For example, the geographical coverage area corresponding to map data at each level may be expressed by using a polygon (in a vehicle coordinate system, a polygon vertex is expressed as a point coordinate sequence relative to the vehicle) or a path length (an ID of each path and a start offset and an end offset of the path). The EHP determines, based on the range information, the geographical coverage area corresponding to the first electronic horizon and the geographical coverage area corresponding to the second electronic horizon.

403: The EHP sends the first electronic horizon and/or the second electronic horizon to the EHR based on the first message.

In a possible implementation, the first message is used to request the first electronic horizon, and the first message includes the position information of the vehicle. Before performing step 403, the EHP performs the following operations: The EHP determines the traveling path of the vehicle based on the position information of the vehicle; and constitutes the first electronic horizon based on the topology information of the road connected to the traveling path of the vehicle. In step 403, the EHP sends the first electronic horizon to the EHR based on the first message.

In a possible implementation, the first message is used to request the first electronic horizon, the first message includes the range information, and the range information indicates the geographical coverage area corresponding to the first electronic horizon. Before performing step 403, the EHP performs the following operation: constituting the first electronic horizon based on information about a road in the geographical coverage area corresponding to the first electronic horizon. In step 403, the EHP sends the first electronic horizon to the EHR based on the first message.

In a possible implementation, the first message is used to request the second electronic horizon, and the first message includes the position information of the vehicle. Before performing step 403, the EHP performs the following operations: The EHP determines the traveling path of the vehicle based on the position information of the vehicle; and constitutes the second electronic horizon based on information about the traveling path and information about the sub-path of the traveling path. In step 403, the EHP sends the second electronic horizon to the EHR based on the first message.

In a possible implementation, the first message is used to request the second electronic horizon, the first message includes the range information, and the range information indicates the geographical coverage area corresponding to the second electronic horizon. Before performing step 403, the EHP performs the following operation: constituting the second electronic horizon based on information about a path in the geographical coverage area corresponding to the second electronic horizon. In step 403, the EHP sends the second electronic horizon to the EHR based on the first message.

In a possible implementation, the first message is used to request the first electronic horizon and the second electronic horizon, and the first message includes the position information of the vehicle. Before performing step 403, the EHP performs the following operations: The EHP determines the traveling path of the vehicle based on the position information of the vehicle; constitutes the second electronic horizon based on information about the traveling path and information about the sub-path of the traveling path; and constitutes the first electronic horizon based on topology information of a road connected to the traveling path of the vehicle. In step 403, the EHP sends the first electronic horizon and the second electronic horizon to the EHR based on the first message.

In a possible implementation, the first message is used to request the first electronic horizon and the second electronic horizon, the first message is the range information, and the range information indicates the geographical coverage area corresponding to the first electronic horizon and the geographical coverage area corresponding to the second electronic horizon. Before performing step 403, the EHP performs the following operations: constituting the first electronic horizon based on information about a road in the geographical coverage area corresponding to the first electronic horizon; and constituting the second electronic horizon based on information about a path in the geographical coverage area corresponding to the second electronic horizon. In step 403, the EHP sends the first electronic horizon and the second electronic horizon to the EHR based on the first message.

404: The EHR parses and reconstructs the first electronic horizon and/or the second electronic horizon from the EHP.

In a possible implementation, after the EHR parses and reconstructs the first electronic horizon and the second electronic horizon from the EHP, the vehicle may perform planning and control based on the first electronic horizon and the second electronic horizon. That is, after the EHR parses and reconstructs the first electronic horizon and the second electronic horizon from the EHP, the vehicle may perform, based on the first electronic horizon and the second electronic horizon, an operation that can be performed only by using a high-definition map. The first electronic horizon and the second electronic horizon jointly constitute the high-definition map.

In a possible implementation, after the vehicle travels out of the geographical coverage area corresponding to the second electronic horizon, the vehicle plans the traveling path based on the first electronic horizon, and the vehicle is navigated, based on the traveling path, to the area in which the vehicle can be parked or the vehicle travels to the destination of the vehicle.

In this embodiment of this application, the EHP sends the first electronic horizon and/or the second electronic horizon to the EHR based on the first message. When the EHP sends the first electronic horizon and the second electronic horizon to the EHR, after the vehicle travels out of the geographical coverage area corresponding to the second electronic horizon, the vehicle may travel based on the first electronic horizon. This can resolve a problem that no map data is available after the vehicle travels out of the geographical coverage area corresponding to the second electronic horizon. When the EHP sends the first electronic horizon or the second electronic horizon to the EHR, the EHR can obtain required data, and a transmitted data volume can be reduced.

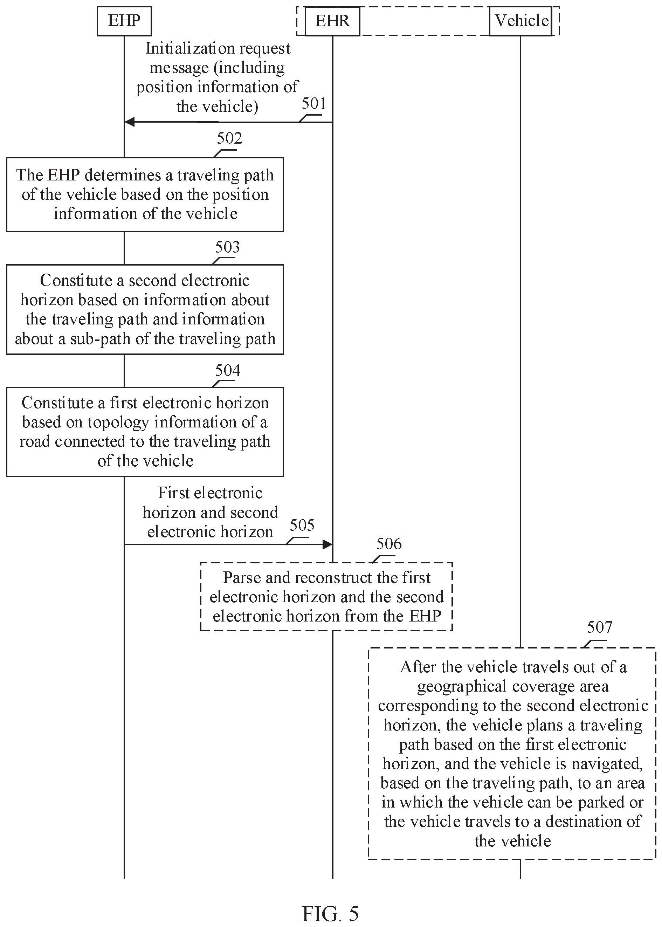

FIG. 5 is a flowchart of another map data level-based transmission method according to an embodiment of this application. A method procedure in FIG. 5 is applicable to a scenario of initializing map data. The method procedure in FIG. 5 is a possible implementation of the method described in FIG. 4. In this implementation, an EHR sends an initialization request message to an EHP, to request a first electronic horizon and a second electronic horizon; and the EHR may obtain required map data. As shown in FIG. 5, the method includes the following steps.

501: The EHR sends the initialization request message to the EHP.

Correspondingly, the EHP receives the initialization request message from the EHR. The initialization request message is an example of the first message described above. The initialization request message is used to request the first electronic horizon and the second electronic horizon. The initialization request message includes position information of a vehicle. Optionally, the initialization request message further includes range information, the range information indicates a geographical coverage area corresponding to the first electronic horizon and/or a geographical coverage area corresponding to the second electronic horizon, and the EHR is deployed on the vehicle.

In a possible implementation, after the vehicle travels out of the geographical coverage area corresponding to the existing first electronic horizon, the EHR sends the initialization request message to the EHP. For example, after the vehicle travels out of the geographical coverage area corresponding to the existing first electronic horizon, the EHR sends the initialization request message to the EHP based on a position of the vehicle. In a possible implementation, after the vehicle is started, when the EHR requests an electronic horizon around the position of the vehicle from the EHP, the EHR sends the initialization request message to the EHP.

In a possible implementation, after learning that the EHP updates map data, the EHR sends the initialization request message to the EHP. An example in which the EHR learns that the EHP updates the map data is as follows: The EHR receives a map update message from the EHP, where the map update message indicates that the EHP updates the map data.

In a possible implementation, the initialization request message further includes at least one of the following: first map element information, where the first map element information indicates a map element corresponding to the first electronic horizon; first limitation information, where the first limitation information is used to limit or indicate a data volume of the first electronic horizon; second map element information, where the second map element information indicates a map element corresponding to the second electronic horizon; and second limitation information, where the second limitation information is used to limit or indicate a data volume of the second electronic horizon. The first map element information and the second map element information may be included in ProfileDataFilter in the example of the initialization request message (InitializationMessage), the first limitation information and the second limitation information may be included in StorageLimit in the example, the position information of the vehicle may be included in CurrentVehiclePosition in the example, and the range information may be included in HorizonRange in the example.

502: The EHP determines a traveling path of the vehicle based on the position information of the vehicle.

In step 502, the traveling path of the vehicle that is determined by the EHP may be denoted as a most preferred path (most preferred path, MPP).

In a possible implementation, the EHP determines the traveling path of the vehicle by matching the position of the vehicle with a map. In a possible implementation, the initialization request message carries information indicating the traveling path of the vehicle. The EHP may determine the traveling path of the vehicle based on the information. The EHP may alternatively determine the traveling path of the vehicle in another manner. This is not limited in this application.

503: The EHP constitutes the second electronic horizon based on information about the traveling path and information about a sub-path of the traveling path.

In a possible implementation, the EHP constitutes the second electronic horizon based on high-precision information of the traveling path of the vehicle and the sub-path of the traveling path of the vehicle. The high-precision information of the traveling path of the vehicle and the subpath of the traveling path of the vehicle is the map element included in the second electronic horizon.

504: The EHP constitutes the first electronic horizon based on topology information of a road connected to the traveling path of the vehicle.

In a possible implementation, the EHP constitutes the first electronic horizon based on the topology information of the road connected to the traveling path of the vehicle and the first map element information.

505: The EHP sends the first electronic horizon and the second electronic horizon to the EHR.

Correspondingly, the EHR receives the first electronic horizon and the second electronic horizon from the EHP.

In a possible implementation, the EHP packs the first electronic horizon and the second electronic horizon and sends the first electronic horizon and the second electronic horizon to the EHR. Data sent by the EHP to the EHR may include all paths and a parent-child relationship (PathControlMessage) of the paths in map data (including the first electronic horizon and the second electronic horizon), start offsets of the electronic horizons on all the paths (ProfileControlMessage), and detailed information (ProfileMessage) of some or all map elements in the map data.

In a possible implementation, the EHP separately packs the first electronic horizon and sends the first electronic horizon to the EHR, and separately packs the second electronic horizon and sends the second electronic horizon to the EHR. Data sent by the EHP to the EHR may include all paths and a parent-child relationship (PathControlMessage) of the paths in the first electronic horizon or the second electronic horizon, start offsets (ProfileControlMessage) of the electronic horizon on all the paths, and detailed information (ProfileMessage) of some or all map elements in the map data.

506: The EHR parses and reconstructs the first electronic horizon and the second electronic horizon from the EHP.

For step 506, refer to step 303 in FIG. 3.

507: After the vehicle travels out of the geographical coverage area corresponding to the second electronic horizon, the vehicle plans the traveling path based on the first electronic horizon, and the vehicle is navigated, based on the traveling path, to an area in which the vehicle can be parked or the vehicle travels to a destination of the vehicle.

For step 507, refer to step 304 in FIG. 3. Step 506 and step 507 are optional steps.

In this embodiment of this application, the EHP sends the first electronic horizon and the second electronic horizon to the EHR based on the initialization request message. After the vehicle travels out of the geographical coverage area corresponding to the second electronic horizon, the vehicle may travel based on the first electronic horizon. This can resolve a problem that no map data is available after the vehicle travels out of the geographical coverage area corresponding to the second electronic horizon.

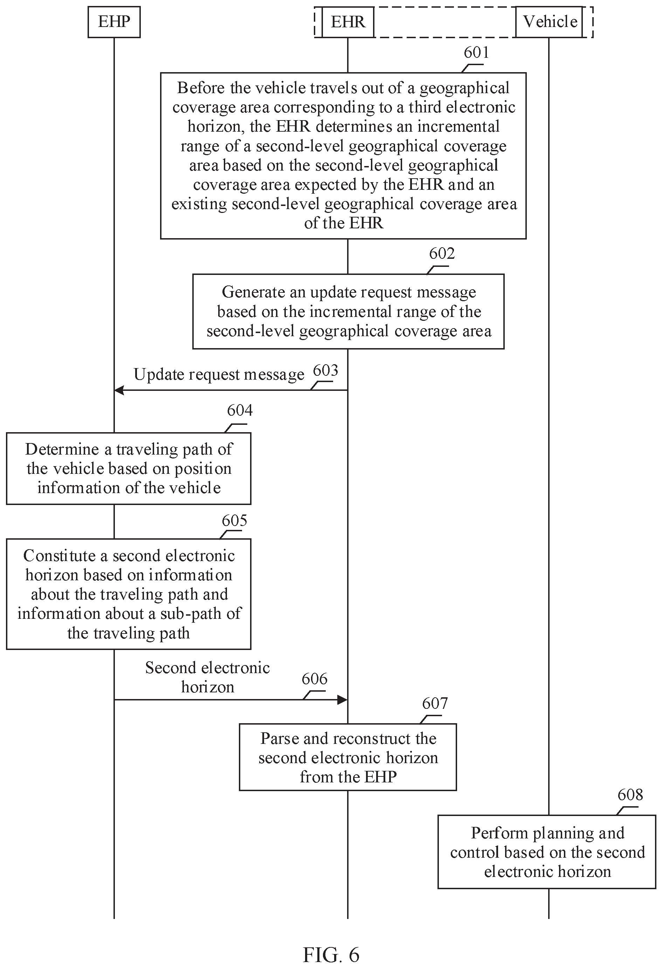

FIG. 6 is a flowchart of another map data level-based transmission method according to an embodiment of this application. A method procedure in FIG. 6 is applicable to a scenario of updating a second electronic horizon before a vehicle travels out of a geographical coverage area corresponding to the existing second electronic horizon. The method procedure in FIG. 6 is a possible implementation of the method described in FIG. 4. In this implementation, an EHR sends an update request message to an EHP, to request to update the second electronic horizon; and the EHR may obtain the required second electronic horizon. As shown in FIG. 6, the method includes the following steps.

601: Before the vehicle travels out of a geographical coverage area corresponding to a third electronic horizon, the EHR determines an incremental range of a second-level geographical coverage area based on the second-level geographical coverage area expected by the EHR and an existing second-level geographical coverage area of the EHR.

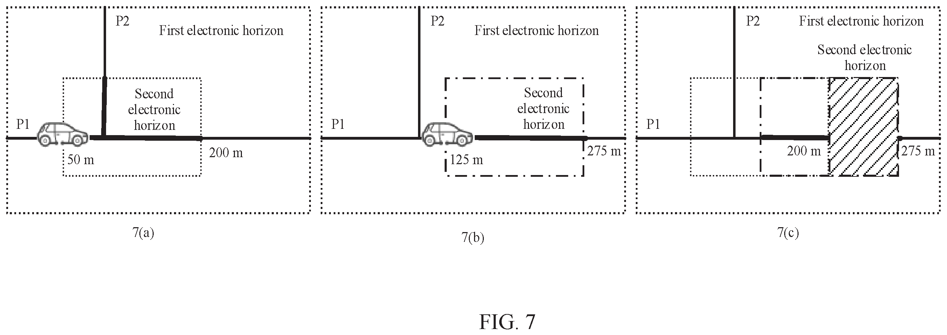

The third electronic horizon is an existing second electronic horizon of the EHR. The existing second-level geographical coverage area of the EHR is the geographical coverage area corresponding to the third electronic horizon, namely, a geographical coverage area corresponding to the existing second electronic horizon of the EHR. The second-level geographical coverage area expected by the EHR is a geographical coverage area corresponding to a newly added second electronic horizon expected by the EHR. FIG. 7 is a diagram of determining an incremental range corresponding to a second electronic horizon according to an embodiment of this application. As shown in FIG. 7, a smaller dashed-line box in 7(a) indicates the existing (or conventional) second-level geographical coverage area of the EHR, and a smaller dashed-line box in 7(b) indicates the second-level geographical coverage area expected by the EHR after the vehicle travels for a period of time. The vehicle travels 75 meters forward along P1 from 7(a) to 7(b). When the vehicle is about to travel out of the geographical coverage area corresponding to the second electronic horizon (in other words, the vehicle travels to a position shown in 7(b)), the EHR compares the expected second-level geographical coverage area (7(b)) with the existing second-level geographical coverage area (7(a)) of the EHR, and determines that an incremental range of the second-level geographical coverage area is a segment whose offset position is 200 m to 275 m on P1, namely, a shadow part in 7(c).

In a possible implementation, when the vehicle is about to travel out of the geographical coverage area corresponding to the third electronic horizon, the EHR determines the incremental range of the second-level geographical coverage area based on the second-level geographical coverage area expected by the EHR and the existing second-level geographical coverage area of the EHR. For example, that the EHR determines that the vehicle is about to travel out of the geographical coverage area corresponding to the third electronic horizon may be: The EHR predicts, based on a current traveling speed of the vehicle and the existing second-level geographical coverage area, that the vehicle is about to travel out of the existing second-level geographical coverage area after first duration. The first duration may be 1 minute, 2 minutes, 5 minutes, 10 minutes, 30 minutes, or the like. This is not limited in this application.

602: The EHR generates the update request message based on the incremental range of the second-level geographical coverage area.

The update request message is used to request the second electronic horizon, namely, the newly added second electronic horizon. The update request message includes position information of the vehicle and range information indicating the incremental range. For example, a first electronic horizon belongs to upper-level map data, the second electronic horizon belongs to bottom-level map data, the third electronic horizon may be existing upper-level map data of the vehicle, and the second electronic horizon requested from the update request message is upper-level map data that needs to be newly added by the vehicle. A geographical coverage area corresponding to the existing first electronic horizon of the EHR is large during initialization, even if the vehicle travels out of the geographical coverage area corresponding to the second electronic horizon, there is still some time before the vehicle travels out of the geographical coverage area corresponding to the first electronic horizon. Therefore, in this embodiment, incremental update on the first electronic horizon may not be performed temporarily.

For example, the update request message further includes at least one of the following: second map element information, where the second map element indicates a map element corresponding to the second electronic horizon; second limitation information, where the second limitation information is used to limit or indicate a data volume of the second electronic horizon; and second path identification information, where the second path identification information indicates a path included in the second electronic horizon.

An example of the update request message (UpdateMessage) sent by the EHR is as follows:
ServerID 1: an ID or an address of a server (namely, the EHP);
ClientID 2: an ID or an address of a client (namely, the EHR);
CurrentVehiclePosition {1, 125, 89.43}, where 1 in {1, 125, 89.43} indicates an ID of a path on which the current vehicle is located, 125 in {1, 125, 89.43} indicates an offset of the vehicle on the path, and 89.43 in {1, 125, 89.43} indicates a vehicle orientation (an angle at which the vehicle turns clockwise from due north).

Level {1} # 1: a second level (corresponding to the second electronic horizon);
StorageLimit {0.5}, where a data volume of the second electronic horizon is limited to be less than or equal to 0.5 KB;
HorizonRange {[1, 200, 275]} # is expressed based on a path range, and [1, 200, 275] indicates the incremental range of the second-level geographical coverage area, that is, a segment whose offset position is 200 m to 275 m on a path (whose ID is 1) on which the current vehicle is located; and
ProfileDataFilter {FlowSpeed}, {1}, FlowSpeed is an example of a map element included in the second electronic horizon, and {1} indicates that the second electronic horizon needs to include a path whose ID is 1.

In the example, {FlowSpeed} is an example of the second map element information, StorageLimit {0.5} is an example of the second limitation information, and {1} is an example of the second path identification information.

603: The EHR sends the update request message to the EHP.

604: The EHP determines a traveling path of the vehicle based on the position information of the vehicle.

For step 604, refer to step 502.

605: The EHP constitutes the second electronic horizon based on information about the traveling path and information about a sub-path of the traveling path.

In a possible implementation, the EHP constitutes the second electronic horizon, namely, a newly added second electronic horizon (refer to FIG. 7, for example, a segment whose offset position is 200 m to 275 m on P1) based on high-precision information of the traveling path of the vehicle and the sub-path of the traveling path. The high-precision information of the traveling path of the vehicle and the sub-path of the traveling path of the vehicle is the map element included in the second electronic horizon.

For step 605, refer to step 503.

606: The EHP sends the second electronic horizon to the EHR.

Correspondingly, the EHR receives the second electronic horizon from the EHP.

In a possible implementation, the EHP separately packs the second electronic horizon and sends the second electronic horizon to the EHR. Data sent by the EHP to the EHR may include all paths and a parent-child relationship (PathControlMessage) of the paths in the second electronic horizon, start offsets (ProfileControlMessage) of the electronic horizon on all the paths, and detailed information (ProfileMessage) of some or all map elements in the second electronic horizon.

607: The EHR parses and reconstructs the second electronic horizon from the EHP.

During actual application, the EHR and the EHP may repeatedly perform step 601 to step 607. In this way, the newly added second electronic horizon may be continuously obtained before the vehicle travels out of the geographical coverage area corresponding to the existing second electronic horizon.

608: The vehicle performs planning and control based on the second electronic horizon.

A sequence of step 608 and the steps in FIG. 6 is not limited. For example, step 608 may be performed before step 601.

In a possible implementation, the vehicle performs planning and control based on the existing first electronic horizon and the existing second electronic horizon. For example, before traveling out of the geographical coverage area corresponding to the existing second electronic horizon, the vehicle may perform, based on the first electronic horizon and the second electronic horizon, an operation that can be performed only by using a high-definition map. The first electronic horizon and the second electronic horizon jointly constitute the high-definition map, or the second electronic horizon is independently used as the high-definition map.

In a possible implementation, the vehicle performs planning and control based on the existing second electronic horizon. For example, before traveling out of the geographical coverage area corresponding to the existing second electronic horizon, the vehicle may perform, based on the existing second electronic horizon, an operation that can be performed only by using a high-definition map. The existing second electronic horizon is independently used as the high-definition map.

In this embodiment of this application, before the vehicle travels out of the geographical coverage area corresponding to the third electronic horizon, the EHR sends the update request message to the EHP, to request to update the second electronic horizon. The second electronic horizon can be separately updated, so that a transmitted data volume can be reduced.

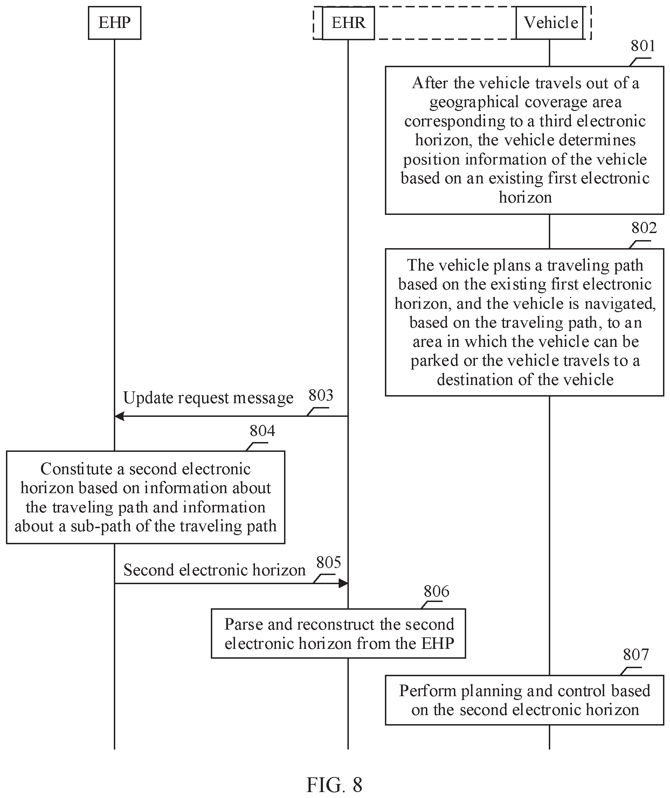

FIG. 8 is a flowchart of another map data level-based transmission method according to an embodiment of this application. A method procedure in FIG. 8 is applicable to a scenario of updating a second electronic horizon after a vehicle travels out of a geographical coverage area corresponding to the existing second electronic horizon. A method procedure in FIG. 8 is a possible implementation of the method described in FIG. 4. In this implementation, an EHR sends an update request message to an EHP, to request to update the second electronic horizon; and the EHR may obtain the required second electronic horizon. FIG. 8 may be an independent method procedure, or may be combined with the method procedure in FIG. 6. For example, before the vehicle travels out of a geographical coverage area corresponding to a third electronic horizon, the method procedure in FIG. 6 is performed; and after the vehicle travels out of the geographical coverage area corresponding to the third electronic horizon, the method procedure in FIG. 8 is performed. As shown in FIG. 8, the method includes the following steps.

801: After the vehicle travels out of the geographical coverage area corresponding to the third electronic horizon, the vehicle determines position information of the vehicle based on an existing first electronic horizon.

An example in which the vehicle travels out of the geographical coverage area corresponding to the third electronic horizon is that the vehicle yaws, that is, the vehicle does not travel along a planned traveling path. The third electronic horizon is an existing second electronic horizon of the EHR. In a possible implementation, after the vehicle travels out of the geographical coverage area corresponding to the third electronic horizon, the vehicle determines a relative position of the vehicle (expressed by using path ID+offset, so that the EHP does not need to rematch a position of the vehicle with a map) based on the existing first electronic horizon.

802: The vehicle plans a traveling path based on the existing first electronic horizon, and the vehicle is navigated, based on the traveling path, to an area in which the vehicle can be parked or the vehicle travels to a destination of the vehicle.

In a possible implementation, before updating the second electronic horizon, the vehicle uses the first electronic horizon as prior information, and fuses the prior information and road information collected by a vehicle-mounted sensor, to perform temporary planning and control.

803: The EHR sends the update request message to the EHP.

Correspondingly, the EHP receives the update request message from the EHR. The update request message is used to request the second electronic horizon, namely, a newly added second electronic horizon. The update request message may include position information of the vehicle and a traveling path of the vehicle. For example, the update request message further includes at least one of the following: second map element information, where the second map element information indicates a map element corresponding to the second electronic horizon; second limitation information, where the second limitation information is used to limit or indicate a data volume of the second electronic horizon; and second path identification information, where the second path identification information indicates a path included in the second electronic horizon.

In a possible implementation, after receiving the update request message, the EHP may determine the traveling path of the vehicle by matching the position of the vehicle with the map, and further verifies the traveling path in the update request message. For example, when time and computing power permit, the EHP determines the traveling path of the vehicle by matching the position of the vehicle with the map, and further verifies the traveling path in the update request message. For example, when the traveling path of the vehicle re-determined by the EHP is different from the traveling path in the update request message, the traveling path re-determined by the EHP may be used.

804: The EHP constitutes the second electronic horizon based on information about the traveling path and information about a sub-path of the traveling path.

In a possible implementation, the EHP constitutes the second electronic horizon based on high-precision information of the traveling path of the vehicle and the sub-path of the traveling path of the vehicle. The high-precision information of the traveling path of the vehicle and the subpath of the traveling path of the vehicle is the map element included in the second electronic horizon.

805: The EHP sends the second electronic horizon to the EHR.

Correspondingly, the EHR receives the second electronic horizon from the EHP. For step 805, refer to step 605 in FIG. 6.

In a possible implementation, when the vehicle is about to travel out of a geographical coverage area corresponding to the existing first electronic horizon, the EHP constitutes the first electronic horizon based on topology information of a road connected to the traveling path of the vehicle. Step 805 may be: The EHP sends the first electronic horizon and the second electronic horizon to the EHR. That the EHP determines that the vehicle is about to travel out of the geographical coverage area corresponding to the existing first electronic horizon may be: The EHP predicts, based on a current traveling speed of the vehicle and the geographical coverage area corresponding to the existing first electronic horizon, that the vehicle is about to travel out of the geographical coverage area after second duration. The second duration may be 5 minutes, 10 minutes, 20 minutes, 30 minutes, or the like. This is not limited in this application. For example, after the EHP receives the update request message from the EHR, the EHP may perform the following operations: constituting the second electronic horizon based on the information about the traveling path and the information about the subpath of the traveling path; when the vehicle is about to travel out of the geographical coverage area corresponding to the existing first electronic horizon, constituting the first electronic horizon based on the topology information of the road connected to the traveling path of the vehicle; and sending the first electronic horizon and the second electronic horizon to the EHR.

806: The EHR parses and reconstructs the second electronic horizon from the EHP.

During actual application, the EHR and the EHP may repeatedly perform step 601 to step 606. In this way, the newly added second electronic horizon may be continuously obtained before the vehicle travels out of the geographical coverage area corresponding to the existing second electronic horizon.

807: The vehicle performs planning and control based on the second electronic horizon.

For step 807, refer to step 607.

In this embodiment of this application, after the vehicle travels out of the geographical coverage area corresponding to the third electronic horizon, the vehicle plans the traveling path based on the existing first electronic horizon, and the vehicle is navigated, based on the traveling path, the vehicle to an area in which the vehicle can be parked or the vehicle travels to a destination of the vehicle. This can resolve a problem that no map data is available for the vehicle. In addition, the EHR sends the update request message to the EHP, to request to update the second electronic horizon. The second electronic horizon can be separately updated, so that a transmitted data volume can be reduced.

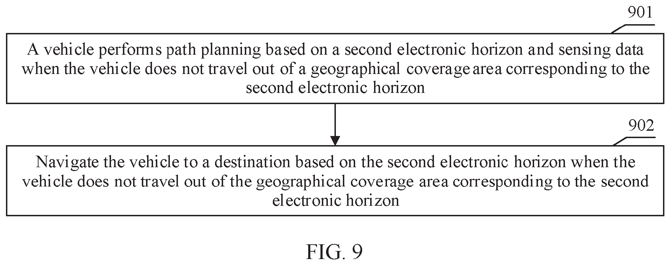

FIG. 9 is a flowchart of a vehicle control method according to an embodiment of this application. A method procedure in FIG. 9 is an example of a procedure that may be performed by a vehicle after the vehicle obtains a first electronic horizon and a second electronic horizon. For example, before the vehicle performs the method procedure in FIG. 9, the vehicle obtains the first electronic horizon and the second electronic horizon by using the method procedure in FIG. 3, FIG. 4, or FIG. 5. As shown in FIG. 9, the method includes the following steps.

901: The vehicle performs path planning based on the second electronic horizon and sensing data when the vehicle does not travel out of a geographical coverage area corresponding to the second electronic horizon.

The sensing data is data obtained by sensing an ambient environment of the vehicle. For example, the vehicle performs path planning based on the second electronic horizon, the first electronic horizon, and the sensing data. The vehicle may travel based on a traveling path planned for the path.

902: Navigate the vehicle to a destination based on the second electronic horizon when the vehicle does not travel out of the geographical coverage area corresponding to the second electronic horizon.

For example, when the vehicle does not travel out of the geographical coverage area corresponding to the second electronic horizon, the vehicle performs path planning based on the second electronic horizon and the sensing data, and the vehicle is navigated to the destination based on the traveling path planned for the path.

In this embodiment of this application, when the vehicle does not travel out of the geographical coverage area corresponding to the second electronic horizon, the vehicle is navigated to the destination based on the second electronic horizon. This can improve traveling safety of the vehicle.

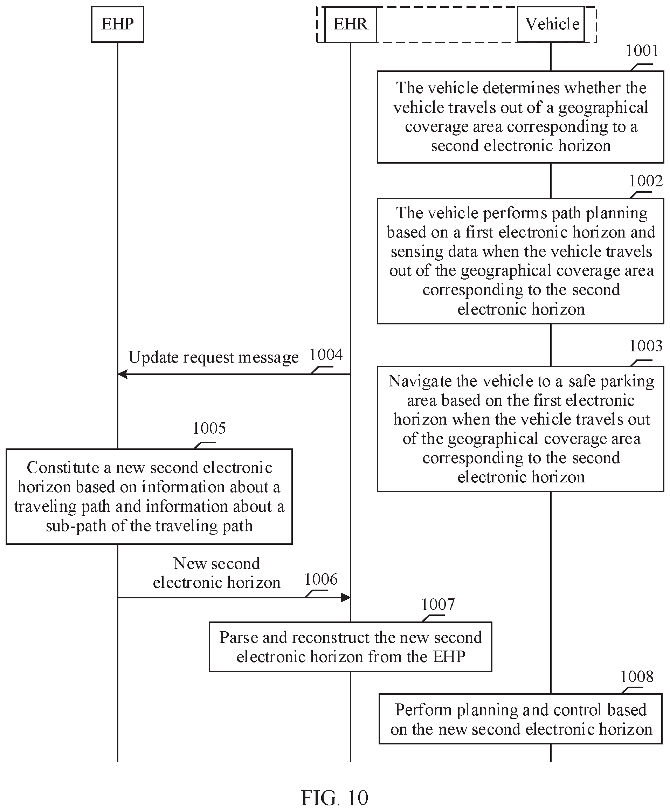

FIG. 10 is a flowchart of another vehicle control method according to an embodiment of this application. A method procedure in FIG. 10 is an example of a procedure that may be performed by a vehicle after the vehicle obtains a first electronic horizon and a second electronic horizon. For example, before the vehicle performs the method procedure in FIG. 10, the vehicle obtains the first electronic horizon and the second electronic horizon by using the method procedure in FIG. 3, FIG. 4, or FIG. 5. FIG. 10 may be an independent procedure, or may be combined with the procedure in FIG. 9. For example, before performing the procedure in FIG. 10, the vehicle first performs the procedure in FIG. 9. As shown in FIG. 10, the method includes the following steps.

1001: The vehicle determines whether the vehicle travels out of a geographical coverage area corresponding to the second electronic horizon.

1002: The vehicle performs path planning based on the first electronic horizon and sensing data when the vehicle travels out of the geographical coverage area corresponding to the second electronic horizon.

The sensing data is data obtained by sensing an ambient environment of the vehicle. For the case in which the vehicle performs path planning based on the second electronic horizon and sensing data when the vehicle does not travel out of a geographical coverage area corresponding to the second electronic horizon, refer to the procedure in FIG. 9.

1003: Navigate the vehicle to a safe parking area based on the first electronic horizon when the vehicle travels out of the geographical coverage area corresponding to the second electronic horizon.

For example, when the vehicle travels out of the geographical coverage area corresponding to the second electronic horizon, the vehicle performs path planning based on the first electronic horizon and the sensing data, and the vehicle is navigated to the safe parking area based on a traveling path planned for the path. The safe parking area is an area for safe parking, for example, a garage, a parking lot, or a planned parking area.

1004: An EHR sends an update request message to an EHP.

Correspondingly, the EHP receives the update request message from the EHR.

1005: The EHP constitutes a new second electronic horizon based on information about the traveling path and information about a sub-path of the traveling path.

The new second electronic horizon may be an updated second electronic horizon to be sent to the vehicle. The second electronic horizon in step 1001 to step 1003 is an old second electronic horizon, namely, an existing second electronic horizon of the vehicle.

1006: The EHP sends the new second electronic horizon to the EHR.

1007: The EHR parses and reconstructs the new second electronic horizon from the EHP.

Step 1007 may be updating the existing second electronic horizon of the vehicle.

1008: The vehicle performs planning and control based on the new second electronic horizon.

Step 1004 to step 1008 are optional steps. For step 1004 to step 1008, refer to step 803 to step 807 in FIG. 8. Step 1004 to step 1008 may be performed after the vehicle determines that the vehicle travels out of the geographical coverage area corresponding to the second electronic horizon. A sequence of step 1004 and step 1002 is not limited, and a sequence of step 1004 and step 1003 is not limited.

In this embodiment of this application, when the vehicle travels out of the geographical coverage area corresponding to the second electronic horizon, the vehicle is navigated to the safe parking area based on the first electronic horizon, to ensure safety of the vehicle and a passenger.

With reference to the accompanying drawings, the following describes a structure of a data processing apparatus that can implement the map data level-based transmission method provided in embodiments of this application. The following briefly describes the data processing apparatus. For details about solution implementation, refer to the descriptions in the foregoing method embodiments. The details are not described below again.

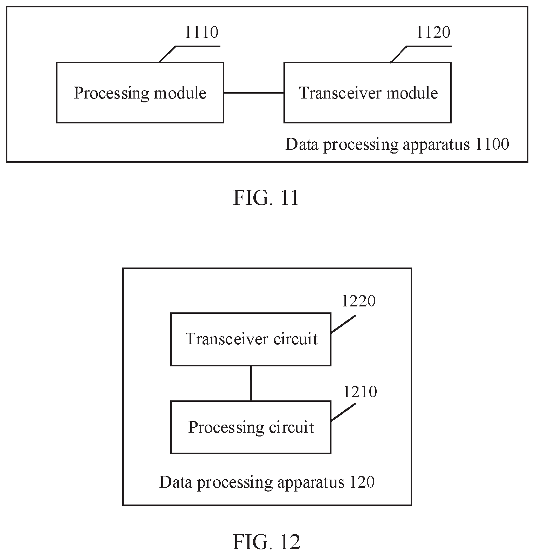

FIG. 11 is a diagram of a structure of a data processing apparatus 1100 according to an embodiment of this application. The data processing apparatus 1100 may correspondingly implement functions or steps implemented by the EHR in the foregoing method embodiments, or may correspondingly implement functions or steps implemented by the EHP in the foregoing method embodiments, or may correspondingly implement functions or steps implemented by the vehicle in the foregoing method embodiments. The data processing apparatus may include a processing module 1110 and a transceiver module 1120. In a possible implementation, the apparatus may further include a storage unit. The storage unit may be configured to store instructions (code or a program) and/or data. The processing module 1110 and the transceiver module 1120 may be coupled to the storage unit. For example, the processing module 1110 may read the instructions (the code or the program) and/or the data in the storage unit, to implement a corresponding method. The foregoing units may be independently disposed, or may be partially or completely integrated. For example, the transceiver module 1120 may include a sending module and a receiving module. The sending module may be a transmitter, and the receiving module may be a receiver. An entity corresponding to the transceiver module 1120 may be a transceiver circuit, for example, a transceiver or a communication interface.

In some possible implementations, the data processing apparatus 1100 can correspondingly implement behavior and functions of the EHR in the foregoing method embodiments. For example, the data processing apparatus 1100 may be a vehicle on which an EHR is deployed, or may be hardware (for example, a chip or a circuit) that implements behavior and functions of the EHR, or may be a logical module or software that implements behavior and functions of the EHR. For example, the transceiver module 1120 may be configured to perform all receiving or sending operations performed by the EHR in the embodiments in FIG. 2, FIG. 3, FIG. 4, FIG. 5, FIG. 6, FIG. 8, and FIG. 10. For example, the processing module 1110 may be configured to perform all operations other than the receiving and sending operations performed by the EHR in the embodiments in FIG. 2, FIG. 3, FIG. 4, FIG. 5, FIG. 6, FIG. 8, and FIG. 10.

In some possible implementations, the data processing apparatus 1100 can correspondingly implement behavior and functions of the EHP in the foregoing method embodiments. For example, the data processing apparatus 1100 may be a vehicle on which an EHP is deployed, or may be a hardware entity (for example, a chip or a circuit) that implements behavior and functions of the EHP, or may be a logical module or software that implements behavior and functions of the EHP. For example, the transceiver module 1120 may be configured to perform all receiving or sending operations performed by the EHP in the embodiments in FIG. 2, FIG. 3, FIG. 4, FIG. 5, FIG. 6, FIG. 8, and FIG. 10. For example, the processing module 1110 may be configured to perform all operations other than the receiving and sending operations performed by the EHP in the embodiments in FIG. 2, FIG. 3, FIG. 4, FIG. 5, FIG. 6, FIG. 8, and FIG. 10.

In some possible implementations, the data processing apparatus 1100 can correspondingly implement behavior and functions of the vehicle in the foregoing method embodiments. For example, the data processing apparatus 1100 may be a vehicle, or may be a component (for example, a chip or a circuit) used in the vehicle. For example, the transceiver module 1120 may be configured to perform all receiving or sending operations performed by the vehicle in the embodiments in FIG. 6, FIG. 8, FIG. 9, and FIG. 10. For example, the processing module 1110 may be configured to perform all operations other than the receiving and sending operations performed by the vehicle in the embodiments in FIG. 6, FIG. 8, FIG. 9, and FIG. 10.

FIG. 12 is a diagram of a structure of another data processing apparatus 120 according to an embodiment of this application. The data processing apparatus in FIG. 11 may be an entity of the EHR or a chip configured to implement behavior and functions of the EHR, or an entity of the EHP or a chip configured to implement behavior and functions of the EHP, or may be a vehicle or a chip used in the vehicle. As shown in FIG. 12, the data processing apparatus 120 includes a processing circuit 1210 and a transceiver circuit 1220.

In some embodiments of this application, the processing circuit 1210 and the transceiver circuit 1220 may be configured to perform a function, an operation, or the like performed by the EHR. For example, the transceiver circuit 1220 is configured to perform all receiving or sending operations performed by the EHR in the embodiments in FIG. 2, FIG. 3, FIG. 4, FIG. 5, FIG. 6, FIG. 8, and FIG. 10. For example, the processing circuit 1210 is configured to perform all operations other than the receiving and sending operations performed by the EHR in the embodiments in FIG. 2, FIG. 3, FIG. 4, FIG. 5, FIG. 6, FIG. 8, and FIG. 10.

In some embodiments of this application, the processing circuit 1210 and the transceiver circuit 1220 may be configured to perform a function, an operation, or the like performed by the EHP. For example, the transceiver circuit 1220 is configured to perform all receiving or sending operations performed by the EHP in the embodiments in FIG. 2, FIG. 3, FIG. 4, FIG. 5, FIG. 6, FIG. 8, and FIG. 10. For example, the processing circuit 1210 is configured to perform all operations other than the receiving and sending operations performed by the EHP in the embodiments in FIG. 2, FIG. 3, FIG. 4, FIG. 5, FIG. 6, FIG. 8, and FIG. 10.

In some embodiments of this application, the processing circuit 1210 and the transceiver circuit 1220 may be configured to perform a function, an operation, or the like performed by the vehicle. For example, the transceiver circuit 1220 is configured to perform all receiving or sending operations performed by the vehicle in the embodiments in FIG. 6, FIG. 8, FIG. 9, and FIG. 10. For example, the processing circuit 1210 is configured to perform all operations other than the receiving and sending operations performed by the vehicle in the embodiments in FIG. 6, FIG. 8, FIG. 9, and FIG. 10.

In a possible implementation, the transceiver circuit 1220 includes at least one transceiver, and the processing circuit 1210 includes at least one processor, or a circuit that is in the at least one processor and that is used for processing or control.

The transceiver is configured to communicate with another device/apparatus through a transmission medium. The processor sends and receives data and/or signaling through the transceiver, and is configured to implement the methods in the foregoing method embodiments. The processor may implement a function of the processing module 1110, and the transceiver may implement a function of the transceiver module 1120. Optionally, the transceiver may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of electromagnetic wave. An input/output apparatus like a touchscreen, a display, or a keyboard, is mainly configured to: receive data input by a user, and output data to the user.

Optionally, the data processing apparatus 120 may further include at least one memory, configured to store program instructions and/or data. The memory is coupled to the processor. The coupling in embodiments of this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. At least one of the at least one memory may be included in the processor.

The processor may read a software program in the memory, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the data processing apparatus 120, the radio frequency circuit receives a radio frequency signal through the antenna, converts the radio frequency signal into a baseband signal, and outputs the baseband signal to the processor. The processor converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the data processing apparatus 120.

A specific connection medium between the transceiver, the processor, and the memory is not limited in embodiments of this application.

In embodiments of this application, the processor may be one of the following components: a general-purpose processor, a digital signal processor, an application-specific integrated circuit, a field-programmable gate array or another programmable logic device, a discrete gate or a transistor logic device, a discrete hardware component, or all or some circuits used for processing functions in the foregoing components. The processor may implement or perform the methods, the steps, and the logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

In a possible implementation, the processing circuit 1210 includes at least one logic circuit, and the transceiver circuit 1220 includes at least one interface. The processing module 1110 in FIG. 11 may be implemented by using the logic circuit, and the transceiver module 1120 in FIG. 11 may be implemented by using the interface. The logic circuit may be a chip, a processing circuit, an integrated circuit, a system-on-chip (system-on-chip, SoC), or the like, and the interface may be a communication interface, an input/output interface, or the like. In this embodiment of this application, the logic circuit and the interface may be coupled to each other. A specific manner of connection between the logical circuit and the interface is not limited in this embodiment of this application.

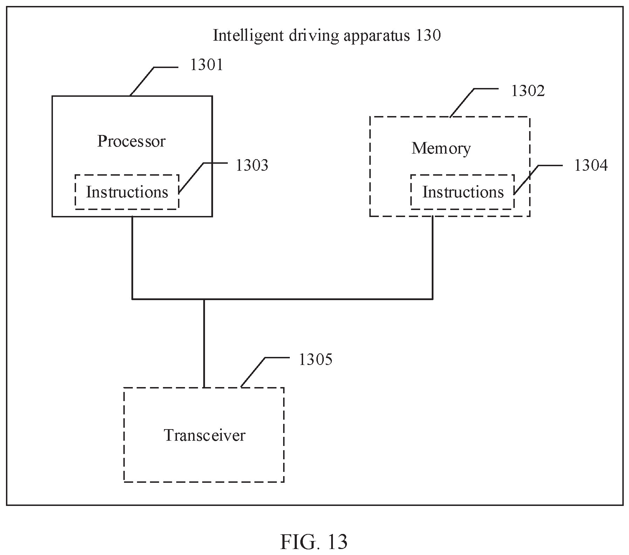

FIG. 13 is a diagram of a structure of another intelligent driving apparatus 130 according to an embodiment of this application. The intelligent driving apparatus 130 corresponds to the vehicle in the foregoing method embodiments, and may be a chip, a chip system, a processor, or the like; or a vehicle-mounted device. The intelligent driving apparatus 130 may be configured to implement the methods described in the foregoing method embodiments. For details, refer to the descriptions in the foregoing method embodiments. An EHR is deployed on the intelligent driving apparatus 130. Alternatively, an EHR and an EHP are deployed on the intelligent driving apparatus 130.

As shown in FIG. 13, the intelligent driving apparatus 130 may include one or more processors 1301. The processor 1301 may be a general-purpose processor, a dedicated processor, or the like. The intelligent driving apparatus 130 may further include a transceiver 1305. The transceiver 1305 may be referred to as a transceiver unit, a transceiver machine, a transceiver circuit, or the like, and is configured to implement sending and receiving functions. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the intelligent driving apparatus 130 may include one or more memories 1302. The memory 1302 may store instructions 1304. The instructions 1304 may be a computer program. The computer program may be run on the intelligent driving apparatus 130, for the intelligent driving apparatus 130 to perform the methods described in the foregoing method embodiments. Optionally, the memory 1302 may further store data. The intelligent driving apparatus 130 and the memory 1302 may be separately disposed, or may be integrated together.

For another example, the intelligent driving apparatus 130 may be:
(1) an independent integrated circuit IC, a chip, a chip system, or subsystem;
(2) a module that may be embedded in another device;
(3) a mobile unit, a vehicle-mounted device cloud device, an artificial intelligence device, or the like.

In a possible implementation, the processor 1301 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In an implementation, the processor 1301 may store instructions 1303, and the instructions may be a computer program. The instructions 1303 are run on the processor 1301, for the intelligent driving apparatus 130 to perform the methods described in the foregoing method embodiments. The instructions 1303 may be built into the processor 1301. In this case, the processor 1301 may be implemented by using hardware.

In an implementation, the intelligent driving apparatus 130 may include a circuit. The circuit may implement the sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like.

This application further provides a computer-readable storage medium. The computer-readable storage medium stores a computer program or instructions. When the computer program or the instructions are run on a computer, the computer is enabled to perform the methods in the foregoing embodiments. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. The computer may be a general-purpose computer, a dedicated computer, a computer network, or another programmable apparatus.

It should be noted that a person of ordinary skill in the art may understand that all or some of the steps of the methods in the foregoing embodiments may be implemented by a program instructing related hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (Electrically-Erasable Programmable Read-Only Memory, EEPROM), a compact disc read-only memory (Compact Disc read-only memory, CD-ROM) or another optical disc memory, a magnetic disk memory, a magnetic tape memory, or any other computer-readable medium capable of carrying or storing data.

This application further provides a chip. The chip includes a communication interface and a processor. The communication interface is configured to receive and send a signal of the chip. The processor is configured to execute computer program instructions, for a data processing apparatus including the chip to perform the methods in the foregoing embodiments.

This application further provides a map data updating system, including the foregoing EHR and the foregoing EHP.

This application further provides a computer program product. The computer program product includes instructions or a computer program. When the instructions or the computer program is run on a computer, the methods in the foregoing embodiments are performed. The computer program product includes one or more computer instructions. When the computer program instructions are loaded and executed on the computer, all or some of the foregoing procedures or functions in embodiments of this application are generated.

All or some of the foregoing embodiments may be implemented by using software, hardware, firmware, or any combination thereof. When software is used for implementation, all or some of embodiments may be implemented in a form of computer program product.

In the foregoing embodiments, descriptions of embodiments have respective focuses. For a part that is not described in detail in an embodiment, refer to related descriptions in other embodiments.

It should be noted that, for brief description, the foregoing method embodiments are represented as a series of action combinations. However, a person skilled in the art should appreciate that this application is not limited to the described order of the actions, because according to this application, some steps may be performed in other orders or simultaneously. It should be further appreciated by a person skilled in the art that embodiments described in this specification all belong to optional embodiments, and the involved actions and modules are not necessarily required by this application.

In the several embodiments provided in this application, it should be understood that the disclosed apparatuses may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual connections or couplings or communication connections may be implemented through interfaces. The indirect connections or communication connections between the apparatuses or units may be implemented in electronic or other forms.

The units described as separate components may or may not be physically separate, and parts displayed as units may or may not be physical units, may be located at one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

The technical solutions of this application essentially, or the part contributing to the conventional technology, or all or some of the technical solutions may be implemented in a form of software product. The computer program product is stored in a storage medium, and includes several instructions for instructing a device (which may be a terminal device, a network device, a vehicle-mounted device, a router, a server, a robot, a chip, or the like) to perform all or some of the steps of the methods described in embodiments of this application.

## Claims

1. A map data updating system, wherein the system comprises an electronic horizon reconstructor EHR and an electronic horizon provider EHP, wherein
the EHP sends a first electronic horizon to the EHR; and
the EHP sends a second electronic horizon to the EHR, wherein
a geographical coverage area corresponding to the first electronic horizon is greater than and comprises a geographical coverage area corresponding to the second electronic horizon; and a map element comprised in the first electronic horizon is different from a map element comprised in the second electronic horizon, and/or precision of the first electronic horizon is lower than precision of the second electronic horizon.

2. A map data level-based transmission method, wherein the method is applied to an electronic horizon reconstructor EHR, and the method comprises:
receiving a first electronic horizon from an electronic horizon provider EHP; and
receiving a second electronic horizon from the EHP, wherein
a geographical coverage area corresponding to the first electronic horizon is greater than and comprises a geographical coverage area corresponding to the second electronic horizon; and a map element comprised in the first electronic horizon is different from a map element comprised in the second electronic horizon, and/or precision of the first electronic horizon is lower than precision of the second electronic horizon.

3. The method according to claim 2, wherein the map element comprised in the first electronic horizon comprises at least one of the following: road topology information, a road traveling rule, and traffic flow information; and the map element comprised in the second electronic horizon comprises at least one of the following: lane information, information about a sign, information about an obstacle, information about a traffic light, a traffic sign, a real-time traffic flow speed, speed limit information, weather information, road type information, road surface information, a map database corresponding to a road section, and road condition information.

4. The method according to claim 2 or 3, wherein the method further comprises:
sending a first message to the EHP, wherein the first message is used to request the first electronic horizon and/or the second electronic horizon, wherein
the first message comprises at least one of position information and range information of a vehicle, the range information indicates the geographical coverage area corresponding to the first electronic horizon and/or the geographical coverage area corresponding to the second electronic horizon, and the EHR is deployed on the vehicle.

5. The method according to claim 4, wherein the first message is an initialization request message, and the first message is used to request the first electronic horizon and the second electronic horizon.

6. The method according to claim 5, wherein the first message further comprises at least one of the following: first map element information, wherein the first map element information indicates the map element corresponding to the first electronic horizon; first limitation information, wherein the first limitation information is used to limit or indicate a data volume of the first electronic horizon; second map element information, wherein the second map element information indicates the map element corresponding to the second electronic horizon; and second limitation information, wherein the second limitation information is used to limit or indicate a data volume of the second electronic horizon.

7. The method according to claim 4, wherein the sending the first message to the EHP comprises:
sending the first message to the EHP before the vehicle travels out of a geographical coverage area corresponding to a third electronic horizon, wherein the first message is an update request message, the first message is used to request the second electronic horizon, a type of a map element comprised in the third electronic horizon is the same as a type of the map element comprised in the second electronic horizon, a partial geographical coverage area in the geographical coverage area corresponding to the second electronic horizon is not comprised in the geographical coverage area corresponding to the third electronic horizon, and the geographical coverage area corresponding to the first electronic horizon is greater than and comprises the geographical coverage area corresponding to the third electronic horizon.

8. The method according to claim 7, wherein before the first message is sent, the method further comprises:
determining an incremental range of a second-level geographical coverage area based on the second-level geographical coverage area expected by the EHR and an existing second-level geographical coverage area of the EHR, wherein the existing second-level geographical coverage area of the EHR is the geographical coverage area corresponding to the third electronic horizon; and
generating the first message based on the incremental range, wherein the range information comprised in the first message indicates the incremental range.

9. The method according to claim 7 or 8, wherein the first message further comprises at least one of the following: second map element information, wherein the second map element indicates the map element corresponding to the second electronic horizon; second limitation information, wherein the second limitation information is used to limit or indicate a data volume of the second electronic horizon; and second path identification information, wherein the second path identification information indicates a path comprised in the second electronic horizon.

10. The method according to claim 4, wherein the sending the first message to the EHP comprises:
sending the first message to the EHP after the vehicle travels out of a geographical coverage area corresponding to third-level map data, wherein the first message is an update request message, the first message is used to request the second electronic horizon, a type of a map element comprised in the third electronic horizon is the same as a type of the map element comprised in the second electronic horizon, and a partial geographical coverage area in the geographical coverage area corresponding to the second electronic horizon is not comprised in the geographical coverage area corresponding to the third electronic horizon.

11. The method according to claim 10, wherein the first message further comprises at least one of the following: second map element information, wherein the second map element information indicates the map element corresponding to the second electronic horizon; second limitation information, wherein the second limitation information is used to limit or indicate a data volume of the second electronic horizon; second path identification information, wherein the second path identification information indicates a path comprised in the second electronic horizon; and information about a traveling path planned by the vehicle.

12. A map data level-based transmission method, wherein the method is applied to an electronic horizon provider EHP, and the method comprises:
sending a first electronic horizon to an electronic horizon reconstructor EHR; and
sending a second electronic horizon to the EHR, wherein
a geographical coverage area corresponding to the first electronic horizon is greater than and comprises a geographical coverage area corresponding to the second electronic horizon; and a map element comprised in the first electronic horizon is different from a map element comprised in the second electronic horizon, and/or precision of the first electronic horizon is lower than precision of the second electronic horizon.

13. The method according to claim 12, wherein the map element comprised in the first electronic horizon comprises at least one of the following: road topology information, a road traveling rule, and traffic flow information; and the map element comprised in the second electronic horizon comprises at least one of the following: lane information, information about a sign, information about an obstacle, information about a traffic light, a traffic sign, a real-time traffic flow speed, speed limit information, weather information, road type information, road surface information, a map database corresponding to a road section, and road condition information.

14. The method according to claim 12 or 13, wherein the method further comprises:
receiving a first message from the EHR, wherein the first message is used to request the first electronic horizon and/or the second electronic horizon, the first message comprises at least one of position information and range information of a vehicle, the range information indicates the geographical coverage area corresponding to the first electronic horizon and/or the geographical coverage area corresponding to the second electronic horizon, and the EHR is deployed on the vehicle; and
sending the first electronic horizon and/or the second electronic horizon to the EHR based on the first message.

15. The method according to claim 14, wherein the first message is an initialization request message, the first message is used to request the first electronic horizon and the second electronic horizon, and the first message comprises the position information of the vehicle; and before the first electronic horizon and/or the second electronic horizon are/is sent to the EHR based on the first message, the method further comprises:
determining a traveling path of the vehicle based on the position information of the vehicle;
constituting the second electronic horizon based on information about the traveling path and information about a sub-path of the traveling path; and
constituting the first electronic horizon based on topology information of a road connected to the traveling path of the vehicle.

16. The method according to claim 15, wherein the first message further comprises at least one of the following: first map element information, wherein the first map element information indicates the map element corresponding to the first electronic horizon; first limitation information, wherein the first limitation information is used to limit or indicate a data volume of the first electronic horizon; second map element information, wherein the second map element information indicates the map element corresponding to the second electronic horizon; and second limitation information, wherein the second limitation information is used to limit or indicate a data volume of the second electronic horizon.

17. The method according to claim 14, wherein the first message is an update request message, and the first message is used to request the second electronic horizon; and before the first electronic horizon and/or the second electronic horizon are/is sent to the EHR based on the first message, the method further comprises:
constituting the second electronic horizon based on information about a traveling path of the vehicle and information about a sub-path of the traveling path.

18. The method according to claim 17, wherein the first message further comprises the traveling path of the vehicle; and before the second electronic horizon is constituted based on the information about the traveling path of the vehicle and the information about the sub-path of the traveling path, the method further comprises:
determining, based on the traveling path of the vehicle, the geographical coverage area corresponding to the second electronic horizon.

19. The method according to claim 17 or 18, wherein the range information indicates an incremental range of a second-level geographical coverage area expected by the EHR relative to an existing second-level geographical coverage area of the EHR, the existing second-level geographical coverage area of the EHR is a geographical coverage area corresponding to an existing third electronic horizon of the EHR, and a type of a map element comprised in the third electronic horizon is the same as a type of the map element comprised in the second electronic horizon; and the constituting the second electronic horizon based on the information about the traveling path of the vehicle and the information about the sub-path of the traveling path comprises: constituting the second electronic horizon based on the information about the traveling path of the vehicle and the information about the sub-path of the traveling path in the incremental range.

20. The method according to any one of claims 17 to 19, wherein the first message further comprises at least one of the following: second map element information, wherein the second map element indicates the map element corresponding to the second electronic horizon; second limitation information, wherein the second limitation information is used to limit or indicate a data volume of the second electronic horizon; and second path identification information, wherein the second path identification information indicates a path comprised in the second electronic horizon.

21. A vehicle control method, wherein the method comprises:
determining whether a vehicle travels out of a geographical coverage area corresponding to a second electronic horizon; and
performing path planning based on a first electronic horizon and sensing data when the vehicle travels out of the geographical coverage area corresponding to the second electronic horizon, wherein the sensing data is data obtained by sensing an ambient environment of the vehicle, wherein
a geographical coverage area corresponding to the first electronic horizon is greater than and comprises the geographical coverage area corresponding to the second electronic horizon; and a map element comprised in the first electronic horizon is different from a map element comprised in the second electronic horizon, and/or precision of the first electronic horizon is lower than precision of the second electronic horizon.

22. The method according to claim 21, wherein the method further comprises:
performing path planning based on the second electronic horizon and sensing data when the vehicle does not travel out of the geographical coverage area corresponding to the second electronic horizon.

23. The method according to claim 22, wherein the method further comprises:
navigating the vehicle to a destination based on the second electronic horizon when the vehicle does not travel out of the geographical coverage area corresponding to the second electronic horizon.

24. The method according to any one of claims 21 to 23, wherein the method further comprises:
navigating the vehicle to a safe parking area based on the first electronic horizon when the vehicle travels out of the geographical coverage area corresponding to the second electronic horizon.

25. A data processing apparatus, comprising a module configured to implement the method according to any one of claims 2 to 11.

26. A data processing apparatus, comprising a module configured to implement the method according to any one of claims 12 to 20.

27. A data processing apparatus, comprising a module configured to implement the method according to any one of claims 21 to 24.

28. A computer-readable storage medium, wherein the computer-readable storage medium stores a computer program, the computer program comprises program instructions, and when the program instructions are executed by a processor, the method according to any one of claims 2 to 24 is performed.

29. A data processing apparatus, comprising a processor, wherein the processor is configured to: when executing instructions, enable the data processing apparatus to perform the method according to any one of claims 2 to 24.

30. A chip, comprising:
a communication interface, configured to receive and send a signal of the chip; and
a processor, configured to execute computer program instructions, to enable a data processing apparatus comprising the chip to perform the method according to any one of claims 2 to 24.

31. A computer program product, wherein when the computer program product runs on a computer, the computer is enabled to perform the method according to any one of claims 1 to 24.
